(19) Europäisches Patentamt
European Patent Office
Office européen des brevets

(11) Numéro de publication: **0 294 282 B1**

(12) **FASCICULE DE BREVET EUROPEEN**

(45) Date de publication de fascicule du brevet: **14.07.93**

(51) Int. Cl.$^5$: **H04N 7/01**

(21) Numéro de dépôt: **88401315.2**

(22) Date de dépôt: **31.05.88**

Jointe à la demande no. 88905206.4/0315673 (numéro de dépôt/numéro de publication de la demande européenne) par décision du 28.12.89.

(54) **Procédé d'interpolation temporelle d'images et dispositif pour la mise en oeuvre de ce procédé.**

(30) Priorité: **04.06.87 FR 8707814**

(43) Date de publication de la demande:
**07.12.88 Bulletin 88/49**

(45) Mention de la délivrance du brevet:
**14.07.93 Bulletin 93/28**

(84) Etats contractants désignés:
**AT CH DE ES GB IT LI NL SE**

(56) Documents cités:
**GB-A- 2 110 046**
**GB-A- 2 162 018**
**GB-A- 2 165 417**

**PHILIPS JOURNAL OF RESEARCH, vol. 41, no. 6, 1986, pages 576-603, Eindhoven, NL; R.S. PRODAN: "Multidimensional digital signal processing for television scan conversion"**

(73) Titulaire: **THOMSON GRAND PUBLIC**
**74, rue du Surmelin**
**F-75020 Paris(FR)**

(72) Inventeur: **Robert, Philippe**
**THOMSON-CSF SCPI 19, avenue de Messine**
**F-75008 Paris(FR)**

(74) Mandataire: **Lincot, Georges et al**
**THOMSON-CSF, SCPI, B.P. 329, 50, rue Jean-Pierre Timbaud**
**F-92402 Courbevoie Cédex (FR)**

EP 0 294 282 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne un procédé d'interpolation temporelle d'images permettant de reconstituer les valeurs de luminance des pixels d'une image manquante dans une suite d'images représentant un même objet. Un tel procédé est utilisable, par exemple, pour une transmission d'images vidéo à très bas débit, consistant à ne transmettre que certaines trames, avec un codage réduisant le débit d'informations, et à restituer les trames non transmises, par une interpolation à partir des trames transmises et décodées. Il est utilisable aussi pour la conversion d'une suite d'images vidéo d'un standard ayant une fréquence de 50 Hz vers un standard ayant une fréquence de 60 Hz, ou réciproquement. Pour une telle conversion, la plupart des trames doivent être interpolées à partir des trames disponibles à la fréquence de 50 Hz, car les instants de prise de vue à la fréquence de 60 Hz ne coïncident pas, avec les instants de prise de vue à la fréquence de 50 Hz.

L'interpolation a donc pour but de déterminer une valeur de luminance $L(IX,IY,T_j)$ pour chaque pixel d'une trame à interpoler correspondant à un instant $T_j$, à partir des valeurs de luminance $L(IX,IY,T_a)$ et $L(IX,IY,T_b)$ des pixels de deux trames connues correspondant à des instants $T_a$ et $T_b$ tels que $T_j$ est compris entre $T_a$ et $T_b$. Les pixels des trames sont repérés par les coordonnées (IX,IY) de leur centre dans un repère ortho-normé qui est commun pour toutes les trames.

Une première classe de procédés d'interpolation temporelle dont un exemple de procédé est décrit par exemple dans la demande de brevet GB-A-2162018. ple consistant à calculer, pour chaque pixel à interpoler, une combinaison linéaire de deux valeurs de luminance des pixels ayant des coordonnées homologues (IX,IY) dans les deux trames connues correspondant aux instants $T_a$ et $T_b$ , pondérées par les durées $T_b$-$T_j$ et $T_j$-$T_a$ , selon la formule :

$$L(IX,IY,T_j) = \frac{T_b-T_j}{T_b-T_a} \cdot L(IX,IY,T_a) + \frac{T_j-T_a}{T_b-T_a} \cdot L(IX,IY,T_b) \quad (1)$$

Les coordonnées homologues sont exactement identiques si les deux trames $T_a$ et $T_b$ ont la même parité, et sont identiques à une demi-ligne près si elles ont des parités différentes.

Cette classe de procédés permet une bonne restitution des zones fixes dans une suite de trames, car alors les valeurs de luminance utilisées pour l'interpolation correspondent effectivement à un même point de l'objet représenté par la suite de trames. Par contre, les zones en mouvement sont mal restituées et sont d'autant plus floues que la vitesse du mouvement est plus élevée.

Une seconde classe de procédés prend en compte le mouvement de l'objet représenté par les deux trames connues. Ces procédés consistent à supposer que chaque point d'un objet en mouvement représenté par la suite de trames se déplace de la première trame connue à la seconde trame connue par une translation élémentaire à vitesse constante. Des procédés connus permettent de déterminer un vecteur vitesse $\vec{V}$ = (VX,VY) pour chaque pixel de la trame à interpoler. Ce vecteur traduit une translation élementaire du pixel, qui ne correspond pas forcément à la vitesse de l'objet représenté mais correspond aux variations de luminance des pixels représentant cet objet.

Ces procédés de la seconde classe consistent ensuite à calculer une valeur de luminance interpolée pour chaque pixel, en tenant compte de deux déplacements de sens opposés respectivement dans les deux trames connues. Ces deux déplacements sont dans la direction du vecteur vitesse associé au pixel à interpoler, et ont respectivement un module proportionnel à l'intervalle de temps séparant la trame à interpoler et la trame connue considérée. Chaque valeur de luminance interpolée est donc calculée selon la formule :

$$\begin{aligned} L(IX,IY,T_j) = & \\ & \frac{T_b-T_j}{T_b-T_a} \cdot L(IX-VX \cdot (T_j-T_a), IY-VY \cdot (T_j-T_a), T_a) \\ & + \frac{T_j-T_a}{T_b-T_a} \cdot L(IX+VX \cdot (T_b-T_j), IY+VY \cdot (T_b-T_j), T_b) \quad (2) \end{aligned}$$

Cette classe de procédés permet de restituer de façon plus précise les zones en mouvement, aussi bien que les zones fixes des trames à interpoler. Mais la mise en oeuvre de cette classe de procédés comporte une difficulté importante qui est la détermination d'un vecteur vitesse à associer à chaque pixel à interpoler. Un premier procédé connu, décrit par H.C. Bergman et paru dans un article de International Zurich Seminar on Digital Communications de 1984 ayant pour titre "Motion Adaptative Frame Interpolation" consiste à associer à chaque pixel à interpoler le vecteur vitesse estimé pour le pixel ayant les mêmes coordonnées dans la première trame connue. Cette association est toujours plus ou moins inexacte puisque dans les zones en mouvement ces deux pixels ne représentent pas un même point de l'objet en mouvement. Cette association n'est exacte que dans la mesure où des points voisins de l'objet en mouvement ont le même vecteur vitesse, ce qui n'est pas forcément le cas, notamment si l'objet représenté subit une rotation. La fidélité de restitution des images varie donc, dans les zones en mouvement, en fonction du type de mouvement de ces zones.

Un second procédé connu, décrit par M. Bierling et R. Thoma dans la revue Signal Processing, volume 11, n° 4 Decembre 1986 ayant pour titre : "Motion compensating field interpolation using a hierachically structured displacement estimator", consiste à estimer un vecteur vitesse pour chaque pixel de chaque trame à interpoler, indépendamment pour chaque trame à interpoler. Cette estimation est faite à partir du même couple d'images connues, pour toutes les trames à interpoler correspondant à des instants compris entre $T_a$ et $T_b$ , mais elle tient compte de la durée des intervalles de temps séparant la trame à interpoler et les images connues, par conséquent le vecteur vitesse associé à chaque pixel à interpoler a une valeur beaucoup plus précise que celle associée par le procédé décrit précédemment. La fidélité de restitution des trames dans les zones en mouvement est donc rendue indépendante du type de mouvement. Par contre, ce second procédé a pour inconvénient de multiplier le temps de calcul nécessaire pour l'estimation des vecteurs vitesses, puisqu'il est proportionnel au nombre de trames à interpoler comprises entre les deux trames connues.

Le but de l'invention est de proposer un procédé d'interpolation temporelle fournissant une bonne fidélité de restitution des trames dans les zones en mouvement, quel que soit le type de mouvement, sans nécessiter un temps de calcul important pour l'estimation des vecteurs vitesses des pixels des trames à interpoler.

L'objet de l'invention est un procédé appartenant à la seconde classe et qui consiste essentiellement à estimer un vecteur vitesse pour chaque pixel d'une trame unique qui est appelée trame porteuse du mouvement, qui peut être l'une des deux trames connues, puis à déterminer, dans chacune des trames à interpoler, les pixels dits pixels fils, qui ont un vecteur vitesse égal au vecteur vitesse d'un pixel dit pixel père correspondant à un même point de l'objet représenté par la suite de trames, ce point étant supposé se déplacer avec le même vecteur vitesse pendant l'intervalle de temps de $T_a$ à $T_b$.

Naturellement le procédé selon l'invention est applicable aussi à des images qui ne sont pas des trames entrelacées.

Selon l'invention, un procédé d'interpolation temporelle d'images, pour déterminer une valeur de luminance interpolée pour chaque pixel d'une image dite image à interpoler, à partir des valeurs de luminance des pixels d'une première et d'une seconde image dites images connues, prises à des instants $T_a$ et $T_b$ respectivement, $T_j$ étant compris entre $T_a$ et $T_b$ ; consistant à :

- associer les valeurs des composantes d'un vecteur vitesse à chaque pixel de l'image à interpoler, dit pixel à interpoler ;
- déterminer dans les deux images connues les coordonnées de deux points appelés points de base de l'interpolation temporelle, chacun de ces deux points correspondant au centre du pixel à interpoler, par une translation dans le plan de l'une des images connues, translation dont le vecteur est fonction du produit obtenu par la multiplication du vecteur vitesse associé au pixel à interpoler avec respectivement les durées $T_j$-$T_a$ et $T_b$-$T_j$ ;
- déterminer la valeur de luminance de chacun des deux points de base par une interpolation spatiale entre des pixels voisins de chacun de ces points de base, respectivement dans les deux images connues ;
- déterminer une valeur de luminance pour le pixel à interpoler, en calculant une combinaison linéaire des deux valeurs de luminance des points de base, pondérées par les durées $T_j$-$T_a$ et $T_b$-$T_j$ respectivement ;

  est caractérisé en ce que, pour associer les composantes d'un vecteur vitesse à chaque pixel à interpoler, il consiste à :
- estimer par un procédé classique les composantes d'un vecteur vitesse pour chaque pixel d'une seule image, dite porteuse du mouvement, correspondant à un instant $T_i$ compris entre $T_a$ et $T_b$ , ou étant $T_a$ ou $T_b$ ;

- déterminer, successivement pour chaque pixel de l'image porteuse, dit pixel père, les coordonnées du centre d'un pixel à interpoler, dit pixel fils,

  le pixel fils étant le pixel de l'image à interpoler contenant un point correspondant au centre du pixel père translaté par une translation dont le vecteur est fonction du produit obtenu par multiplication du vecteur vitesse du pixel père avec la durée $T_i$-$T_j$;
- associer, successivement à chaque pixel à interpoler, un vecteur vitesse constitué par le vecteur vitesse de son pixel père ou de l'un de ses pixels pères, s'il existe au moins un pixel père pour ce pixel à interpoler.

L'invention sera mieux comprise et d'autres détails apparaîtront à l'aide de la description ci-dessous et des figures l'accompagnant :

- la figure 1 illustre le principe de la seconde classe de procédés connus ;
- la figure 2 illustre le procédé selon l'invention ;
- la figure 3 représente un organigramme illustrant le procédé selon l'invention ;
- les figures 4 et 7 représentent deux organigrammes illustrant une première variante de mise en oeuvre du procédé selon l'invention ;
- la figure 5 représente une partie de cet organigramme ;
- la figure 6 illustre le calcul réalisé conformément à l'organigramme de la figure 5 ;
- les figures 8 et 9 représentent un organigramme d'une deuxième variante de la mise en oeuvre du procédé selon l'invention ;
- les figures 10 et 11 représentent un organigramme d'une troisième variante de la mise en oeuvre du procédé selon l'invention ;
- les figures 12 et 15 représentent le schéma synoptique d'un exemple de réalisation d'un dispositif pour la mise en oeuvre du procédé selon l'invention ;
- les figures 13, 14, 16 représentent un schéma synoptique plus détaillé de trois parties de cet exemple de réalisation.

Dans l'exemple représenté sur la figure 1, une trame à interpoler, appelée trame $T_j$ car elle correspond à un instant $T_j$ , est à interpoler à partir d'une première et d'une seconde trame connues appelées respectivement trame $T_a$ et trame $T_b$ car elles correspondent à un instant $T_a$ qui précède $T_j$ et à un instant $T_b$ qui suit $T_j$ . Toutes ces trames sont repérées dans un même repère ortho-normé PXY ayant pour unités les dimensions d'un pixel. Des points ayant des coordonnées (X, Y) identiques sont différenciés par les instants correspondant aux trames où sont situés ces points. Dans ce qui suit, on distinguera les points et les pixels, chaque point de trame a des dimensions infiniment petites alors que chaque pixel a des dimensions finies déterminées par les caractéristiques de l'échantillonnage. Les trames connues sont fournies par une source de signaux vidéo telle qu'une caméra de télévision classique suivie d'un convertisseur analogique-numérique classique. Chaque pixel est repéré par les coordonnées de son centre et il est représenté par un carré en pointillé. Chacun a une valeur de luminance égale à la moyenne des luminances de tous les points contenus dans ce pixel. Par hypothèse, chaque pixel à interpoler, centré sur un point $M_j$ dansla trame à interpoler $T_j$ , possède un vecteur vitesse associé $\vec{V}$. Il existe alors dans les trames connues $T_a$ et $T_b$ deux points $M_a$ et $M_b$ ayant des coordonnées homologes à celles de $M_j$ et qui sont chacun le centre d'un pixel représenté par un carré en pointillés.

La première classe de procédés connus consiste à calculer la valeur de luminance du pixel à interpoler, en combinant linéairement les valeurs de luminance des pixels centrés sur $M_b$ et sur $M_a$ . Il y a une erreur due au fait que dans la trame $T_b$ l'objet représenté est déplacée, par rapport à la trame $T_j$ , dans la direction et dans le sens du vecteur $\vec{V}$, tandis que, dans la trame $T_a$ au contraire, l'objet représenté est déplacé, dans la direction et dans le sens opposé au vecteur $\vec{V}$. La seconde classe de procédés connus consiste à calculer une valeur de luminance interpolée à partir des valeurs de luminance d'un point B de la trame $T_b$ et d'un point A de la trame $T_a$ , déterminés en tenant compte d'une translation de l'objet dans les trames $T_a$ et $T_b$ , par rapport à la trame $T_j$ . Le point A est déduit de $M_a$ par une translation $-\vec{V}.(T_j-T_a)$ et le point B est déduit de $M_b$ par une translation : $\vec{V}.(T_b-T_j)$, car tout point d'un objet représenté par la suite de trames est supposé garder une vitesse constante entre les instants $T_a$ et $T_b$ . Les points A et B sont appelés, dans ce qui suit, points de base de l'interpolation temporelle. Le procédé selon l'invention est basé sur la même hypothèse.

La figure 2 illustre l'étape du procédé selon l'invention consistant à associer un vecteur vitesse $\vec{V}$ à un pixel à interpoler, centré sur un point $F_j$ de la trame à interpoler $T_j$ .

Dans cet exemple, il n'y a qu'une seule trame $T_j$ à interpoler, mais dans d'autres cas il peut y avoir plusieurs trames à interpoler, correspondant à des instants compris entre $T_a$ et $T_b$ . Pour toutes les trames à interpoler entre $T_a$ et $T_b$ , les vecteurs vitesses associés sont déduits des vecteurs vitesses des pixels d'une unique trame $T_i$ , appelée trame porteuse du mouvement, correspondant à un instant compris entre

$T_a$ et $T_b$ ou pouvant être $T_a$ ou $T_b$ . Les calculs nécessaires pour déterminer les vecteurs vitesses des pixels de la trame porteuse sont réalisés une seule fois quel que soit le nombre des trames à interpoler entre les instants $T_a$ et$T_b$ .

Chaque pixel de la trame $T_i$ porteuse de mouvement est considéré comme le père d'un pixel unique, appelé pixel fils, dans la trame à interpoler $T_j$ , ces deux pixels étant supposés représenter un même point de l'objet en mouvement. Ce point de l'objet en mouvement a un vecteur vitesse qui est connu dans la trame $T_i$ . Ce point est supposé garder ce même vecteur vitesse à tous les instants compris entre $T_a$ et $T_b$ alors qu'il est représenté par une suite de pixels ayant des coordonnées différentes et qui sont tous les fils d'un même pixel père de la trame $T_i$ . Le procédé selon l'invention consiste à déterminer dans chaque trame à interpoler $T_j$ , le centre d'un pixel fils correspondant à un pixel père donné dans la trame $T_i$ porteuse du mouvement, puis à attribuer à ce pixel fils un vecteur vitesse égal au vecteur vitesse de son pixel père, où de l'un de ses pixels pères.

Par exemple, sur la figure 2, un pixel G centré sur le point $C_i$ de la trame $T_i$ a pour vecteur vitesse un vecteur $\vec{V}$ connu. Il a un pixel fils H dans la trame $T_j$ , qui lui correspond approximativement par une translation de vecteur $-\vec{V}.(T_i-T_j)$ à partir d'un point $C_j$ ayant, dans la trame $T_j$ , des coordonnées homologues à celles du point $C_i$ dans la trame $T_i$ . Cette translation fait correspondre exactement un point $E_j$ au point $C_j$ . En général, le point $E_j$ ne coïncide pas avec le centre d'un pixel. Le procédé consiste alors à prendre comme pixel fils le pixel de la trame $T_i$ ayant un centre $F_j$ le plus proche du point $E_j$ , en prenant la valeur entière la plus proche pour chacune des coordonnées. Le vecteur vitesse $\vec{V}$ du pixel père G est alors associé à ce pixel fils H.

Il est à remarquer que certains pixels de la trame $T_i$ porteuse du mouvement n'ont pas de pixels fils, par exemple les pixels situés en bordure de la trame porteuse n'ont pas de pixels fils lorsque le vecteur vitesse $\vec{V}$ est dirigé vers l'intérieur de la trame porteuse. Il est à remarquer aussi qu'un pixel de la trame à interpoler $T_j$ peut être le pixel fils de plusieurs pixels pères simultanément. Par exemple, si deux pixels pères ont respectivement deux vecteurs vitesses non colinéaires, il peut arriver que les deux vecteurs de translation

$$\overrightarrow{C_j E_j}$$

correspondant à ces vecteurs vitesses convergent dans un même pixel fils. Ces cas particuliers sont traités différemment selon trois variantes de mise en oeuvre du procédé selon l'invention, qui seront décrites plus loin.

Dans un cas particulier, la trame porteuse $T_i$ considérée est la trame $T_a$ ou la trame $T_b$ . Si par exemple, la trame porteuse considérée est la trame $T_b$ , l'estimation des vecteurs vitesses de ses pixels peut consister à calculer, par un procédé connu, la translation élémentaire subie pour chaque point de l'objet entre la trame $T_a$ et la trame $T_b$ , en déduire un vecteur translation élémentaire (DX,DY) pour chaque pixel de la trame $T_b$ , puis calculer un vecteur vitesse $\vec{V}$ pour chacun de ces pixels, selon la formule :

$$(VX,VY) = \left(\frac{DX}{T_b-T_a} , \frac{DY}{T_b-T_a}\right) \qquad (3)$$

La figure 3 représente un organigramme des étapes essentielles du procédé selon l'invention, quelle que soit la variante de mise en oeuvre qui est considérée. Cet organigramme représente les étapes du procédé d'interpolation temporelle d'une seule trame à interpoler, correspondant à l'instant $T_j$ . Pour chaque trame à interpoler comprise aussi dans l'intervalle ($T_a$ , $T_b$) les mêmes étapes sont à réaliser. La figure 3 ne mentionne pas l'étape de détermination des vecteurs vitesses des pixels de la trame porteuse $T_i$ car c'est une étape qui est réalisée une seule fois pour toutes les trames à interpoler situées entre les deux trames connues correspondant aux instants $T_a$ et $T_b$ . La trame pour laquelle l'estimation des vecteurs vitesses est réalisée peut être la trame $T_a$ ou la trame $T_b$ ou une trame dont les valeurs de luminance sont inconnues mais qui correspond à un instant $T_i$ compris entre $T_a$ et $T_b$ . Par exemple elle peut être constituée par l'une des trames à interpoler, l'essentiel étant d'utiliser un procédé d'estimation de vitesse permettant d'obtenir une valeur exacte des composantes du vecteur vitesse pour chaque pixel de cette trame. De nombreux procédés d'estimation de vitesse peuvent être utilisés. Ceux qui réalisent la détermination par bloc de pixels ou pixel par pixel conviennent mieux que ceux réalisant la détermination par extraction des caractéristiques de la trame, car ils permettent d'obtenir un champ de vecteurs vitesse plus dense et donc une plus grande précision pour chacun des pixels. Par exemple, il est possible d'appliquer le procédé d'estimation de

vitesse décrit par : NETRAVALL et ROBBINS dans le brevet US-A-4 383 272.

Comme mentionné sur la figure 3, le procédé selon l'invention comporte deux phases principales. Une première phase consiste à balayer les pixels de la trame porteuse $T_i$ et à déterminer un pixel fils, s'il en existe un, dans la trame à interpoler $T_j$ , pour chaque pixel de la trame porteuse. Lorsque tous les pixels de la trame porteuse ont été balayés, une deuxième phase consiste ensuite à balayer successivement tous les pixels de la trame à interpoler $T_j$ ; à associer un vecteur vitesse $\overline{V}$ à chaque pixel de cette trame à interpoler, en fonction du vecteur vitesse du pixel père ou des pixels pères correspondant au pixel à interpoler considéré, s'il existe au moins un pixel père ; à déterminer, pour chaque pixel à interpoler, deux points de base de l'interpolation temporelle, dans les deux trames connues $T_a$ et $T_b$ ; à déterminer la luminance de ces deux points de base par une interpolation spatiale dans les deux trames connues $T_a$ et $T_b$ , lorsque les points de base ne sont pas les centres de pixels de ces trames connues ; et enfin à déterminer une valeur de luminance interpolée, pour le pixel à interpoler considéré, en combinant linéairement les valeurs de luminance des deux points de base conformément à la formule (2).

La figure 4 représente un organigramme de la première phase d'une première variante de mise en oeuvre du procédé selon l'invention. Dans cette variante, le cas où un pixel à interpoler possède plusieurs pixels pères est traité en sélectionnant le pixel père qui est le meilleur. Le critère est la valeur d'une fonction appelée DFD qui est égale à la valeur absolue de la différence des valeurs de luminance des deux points de base A et B. La sélection du meilleur pixel père consiste à comparer entre elles les valeurs de la fonction DFD obtenues en associant au pixel à interpoler le vecteur vitesse de chacun des pixels pères successivement. Le pixel père considéré comme le meilleur, est celui dont le vecteur vitesse donne une valeur minimale à la fonction DFD.

D'autre part, selon cette première variante, le cas d'un pixel orphelin, c'est-à-dire n'ayant aucun pixel père dans la trame porteuse du mouvement, est traité en déterminant un vecteur vitesse interpolé à partir des vecteurs vitesse associés aux pixels voisins dans la trame à interpoler, dans la mesure où ils ne sont pas orphelins. La valeur de la fonction DFD est utilisée comme critère pour détecter les pixels qui sont orphelins. Dans le cas où il n'est pas possible non plus d'associer un vecteur vitesse cette variante consiste à associer un vecteur vitesse nul.

La première phase de la première variante débute par une initialisation d'une mémoire M2 destinée à stocker la valeur minimale de la fonction DFD déterminée pour chaque pixel de la trame à interpoler $T_j$ . elle est initialisée avec une valeur constante égale à 255 qui correspond à la valeur maximale de la luminance des trames et donc aussi de la DFD. La suite des trames considérée est constituée en fait par une suite de trames entrelacées, chaque trame étant considérée comme une trame indépendante. Chaque trame comporte un nombre M de pixels par ligne et un nombre N de lignes. La mémoire M2 a une capactié de MxN octets.

Puis la coordonnée IY est initialisée à zéro. Puis elle est incrémentée d'une unité et la coordonnée IX est initialisée à zéro. Puis la coordonnée IX est incrémentée d'une unité. Les coordonnées (IX,IY) désignent le centre $C_i$ d'un pixel de la trame $T_i$ porteuse du mouvement, et qui peut être un pixel père. Puis le vecteur $\vec{V}(IX,IY,T_i)$, qui est le vecteur vitesse de ce pixel, est lu dans une mémoire MI à une adresse correspondant aux coordonnées de ce pixel. La mémoire MI est une mémoire ayant une capacité de MxN cellules et qui est chargée préalablement avec les valeurs des composantes du vecteur vitesse de tous les pixels de la trame porteuse de mouvement utilisée pour l'interpolation des trames manquantes dans l'intervalle $T_a$ , $T_b$ .

Puis les coordonnées d'un point $E_j$ correspondant au point $C_j$ sont déterminées selon la formule :

$$\overrightarrow{PE_j} = \overrightarrow{PC_j} - \vec{V}(IX,IY).(T_i-T_j) \qquad (4)$$

Puis les coordonnées du centre $F_j$ d'un pixel fils sont déterminées en prenant la partie entière des composantes du vecteur :

$$\overrightarrow{PE_j} + \overrightarrow{Z_j} + (0,5 \ ; \ 0,5)$$

où (0,5 ; 0,5) permet de trouver la valeur entière la plus proche des composantes, et pas seulement la partie entière de celles-ci ; et où

$$\overrightarrow{Z_j}$$

est un vecteur de correction de parité de trames, ayant pour composantes :

(0,5 ; 0,5) si les trames $T_i$ et $T_j$ sont des trames ayant la même parité ;

(0,5 ; 0) si la trame $T_i$ est une trame impaire et la trame $T_j$ est une trame paire ;

(0,5 ; 1) si la trame $T_i$ est une trame paire et si la trame $T_j$ est une trame impaire.

Le pixel à interpoler centré sur le point $F_j$ est un pixel fils du pixel de coordonnée (IX,IY) dans la trame $T_i$ . Le procédé consiste ensuite à déterminer les coordonnées de deux points de base d'interpolation temporelle, B et A, dans les trames $T_b$ et $T_a$ respective ment, selon les formules :

$$\overrightarrow{PB} = \overrightarrow{PF_j} + \vec{V}(IX,IY).(T_b-T_j) + \overrightarrow{Z_b} \qquad (5)$$

$$\overrightarrow{PA} = \overrightarrow{PF_j} - \vec{V}(IX,IY).(T_j-T_a) + \overrightarrow{Z_a} \qquad (6)$$

Dans lesquelles le vecteur $\overrightarrow{Z_b}$ est un vecteur de correction de parité de trames, ayant pour composantes :

(0 ; 0) si la trame $T_a$ et la trame $T_j$ sont des trames ayant la même parité ;

(0 ; 0,5) si la trame $T_a$ est une trame impaire et si la trame $T_j$ est une trame paire ;

(0 ; -0,5) si la trame $T_a$ est une trame paire et si la trame $T_j$ est une trame impaire.

Le vecteur $\overrightarrow{Z_b}$ a des composantes analogues en fonction de la parité de la trame constituant la tramee $T_j$ et de la parité de la trame constituant la trame $T_b$ .

La première phase de la première variante consiste ensuite à calculer les valeurs de luminance L-($\overrightarrow{PA}$,$T_a$) et L($\overrightarrow{PB}$,$T_b$) aux points A et B selon un procédé de calcul qui sera détaillé plus loin et qui consiste en une interpolation spatiale combinant les valeurs de luminance de quatre pixels les plus proches du point A, respectivement du point B, lorsque ces points ne correspondent pas aux centres de pixels de la trame $T_a$ et de la trame $T_b$ . Puis elle consiste à calculer la valeur de la fonction DFD, qui est égale à la valeur absolue de la différence des luminances, aux points A et B déterminés pour ce vecteur vitesse $\vec{V}$.

Puis la valeur de la fonction DFD est comparée à une valeur de seuil fixée égale à 7 dans cet exemple. Si la fonction DFD est inférieure à la valeur de seuil, cela signifie que le pixel de coordonnée (IX,IY) dans la trame porteuse constitue un pixel père pour le pixel à interpoler centré sur le point $F_j$ . Le procédé consiste alors à lire dans la mémoire M2 une valeur DFD' à une adresse correspondant aux composantes du vecteur

$$\overrightarrow{PF_j} .$$

Si la valeur DFD qui vient d'être trouvée pour le pixel père de coordonnée (IX,IY) dans la trame $T_i$ , est inférieure à la valeur DFD' lue dans la mémoire M2, cela signifie que le pixel père qui vient d'être trouvé est meilleur car son vecteur vitesse rend plus petite la valeur de la fonction DFD. Son vecteur vitesse est donc retenu pour être associé au pixel fils centré sur le point $F_j$ . Ce vecteur vitesse est inscrit dans une mémoire M1 à une adresse correspondant au pixel fils, c'est-à-dire correspondant aux composantes du vecteur

$$\overrightarrow{PF_j}.$$

La mémoire M1 est une mémoire de MxN cellules destinée à stocker la valeur des composantes d'un vecteur vitesse associé, pour chaque pixel à interpoler. En outre la valeur de la fonction DFD qui vient d'être calculée est inscrite dans la mémoire M2 à l'adresse correspondant au pixel fils, à la place de la précédente valeur DFD' qui correspond à un autre pixel père ou qui est égale à la valeur d'initialisation.

Il est à noter que dans le cas où le pixel fils n'avait pas déjà un ou plusieurs autres pixels pères, la valeur de la fonction DFD lue dans la mémoire M2 est égale à la valeur d'initialisation de la mémoire M2, c'est-à-dire 255.

Dans le cas où la valeur calculée de la fonction DFD est supérieure à 7, alors le pixel de coordonnée (IX,IY) dans la trame $T_i$ n'est pas considérée comme un pixel père, et la première phase se poursuit par un test de la valeur atteinte par la coordonnée IX.

Si la valeur de la fonction DFD calculée est supérieure à la valeur DFD' lue dans la mémoire M2, cela signifie que le pixel de coordonnée (IX,IY) dans la trame $T_i$ est un pixel père qui n'est pas meilleur qu'un pixel père trouvé précédemment et ayant fourni la valeur DFD' qui vient d'être lue dans la mémoire M2, il est donc à rejeter. La première phase se poursuit par le test portant sur la coordonnée IX.

Si la coordonnée IX n'a pas atteint sa valeur maximale qui est M, les opérations précédentes sont réitérées à partir de l'incrémentation de IX. Si IX a atteint sa valeur maximale, la première phase se poursuit par un test portant sur la coordonnée IY. Si cette dernière n'a pas atteint sa valeur maximale N, les opérations précédentes sont réitérées à partir de l'incrémentation de IY, jusqu'à ce que IY atteigne N. La première phase, de la première variante, est alors terminée, et commence alors la deuxième phase de cette première variante.

La figure 5 représente un organigramme des opérations de calcul des valeurs de luminance $L(\overrightarrow{PA},T_a)$ et de $L(\overrightarrow{PB},T_b)$ par interpolation spatiale dans les trames $T_a$ et $T_b$ respectivement.

La figure 6 illustre ce procédé de calcul pour la valeur de luminance $L(\overrightarrow{PA},T_a)$. En général, le point A ne coïncide pas avec le centre d'un pixel de la trame $T_a$ mais est situé entre les centres G1, G2, G3, G4 de quatre pixels. L'interpolation spatiale de la valeur de luminance au point A consiste tout d'abord à déterminer la partie entière des composantes du vecteur $\overrightarrow{PA}$ pour constituer les coordonnées $(XG_a,YG_a)$ du point G1. Les coordonnées du point G2 sont alors $(XG_a+1,YG_a)$. Les coordonnées du point G3 sont alors $(XG_a,YG_a+1)$ Les coordonnées du point G4 sont alors $(XG_a+1,YG_a+1)$ Dans cet exemple de mise en oeuvre, le point G4 constitue le point de référence pour l'interpolation. Le procédé consiste ensuite à déterminer des coordonnées $(\Delta X_a,\Delta Y_a)$ pour le point A, relativement au point de référence G4. Ces coordonnées relatives sont données par la formule

$$(\Delta X_a,\Delta Y_a) = (XG_a,YG_a) + (1,1) - \overline{PA} \qquad (7)$$

Le procédé consiste ensuite à lire dans la mémoire MA des valeurs de luminance : $L(XG_a,YG_a)$,$L(XG_a+1,YG_a)$, $L(XG_a,YG_a+1)$, $L(XG_a+1,YG_a+1)$, correspondant aux pixels centrés sur les points G1 à G4, à des adresses correspondant aux coordonnées de ces points G1 à G4. Puis la valeur de luminance $L(\overrightarrow{PA},T_a)$ est calculée selon la formule :

$$\begin{aligned} L(\overrightarrow{PA},T_a) = \; & L(XG_a+1,YG_a+1).(1-\Delta X_a)(1-\Delta Y_a) \\ & + L(XG_a,YG_a+1).\Delta X_a.(1-\Delta Y_a) \\ & + L(XG_a+1,YG_a).(1-\Delta X_a).\Delta Y_a \\ & + L(XG_a,YG_a).\Delta X_a.\Delta Y_a+0,5 \end{aligned} \qquad (8)$$

Le calcul de la valeur de luminance $L(\overrightarrow{PB},T_b)$ est réalisée selon une suite d'opérations tout à fait analogue.

La figure 7 représente l'organigramme de la seconde phase de la première variante de la mise en oeuvre du procédé selon l'invention. Cette seconde phase commence par une initialisation à zéro d'une coordonnée IY', puis une incrémentation d'une unité de cette coordonnée et une initialisation à zéro d'une seconde coordonnée IX'. Les coordonnées (IX',IY') sont les coordonnées du centre d'un pixel de la trame à interpoler Tj. Puis le procédé consiste à incrémenter la coordonnée IX' et à lire la valeur DFD (IX',IY') stockée dans la mémoire M2 à une adresse correspondant aux coordonnées (IX',IY'). La valeur lue est comparée à une valeur de seuil égale à la valeur 255 ayant servie à initialiser la mémoire M2 et qui est égale à la valeur maximale de la luminance.

Si la valeur lue n'est pas égale à 255, cela signifie qu'une valeur de la fonction DFD a été calculée précédemment pour ce pixel à interpoler, parce qu'il est le pixel fils d'un pixel de la trame porteuse de mouvement $T_i$. Un vecteur vitesse lui a donc été associé précédemment, au cours de la première phase du procédé. Ce vecteur vitesse est lu dans la mémoire M1 à l'adresse correspondant aux coordonnées (IX',IY') puis est utilisé pour calculer les vecreurs $\overrightarrow{PB}$ et $\overrightarrow{PA}$ conformément aux équations (5) et (6). Ces vecteurs $\overrightarrow{PB}$ et $\overrightarrow{PA}$ déterminent deux points de base A et B pour l'interpolation temporelle. Ils sont utilisés pour calculer les valeurs de luminance $L(\overrightarrow{PA},T_a)$ et $L(\overrightarrow{PB},T_b)$ par une interpolation spatiale dans les trames $T_a$ et $T_b$, conformément à l'organigramme représenté sur la figure 5 et décrit précédemment.

Si la valeur de la fonction DFD lue dans la mémoire M2 est restée égale à la valeur d'initialisation, 255, cela signifie que la première phase du procédé n'a jamais détecté le pixel de coordonnées (IX',IY') comme pixel fils d'un pixel père situé dans la trame porteuse du mouvement $T_i$. Le pixel à interpoler, de coordonnées (IX',IY') est donc un pixel orphelin et il est nécessaire de lui associer un vecteur vitesse par un autre moyen. Selon cette première variante, un vecteur vitesse est calculé en interpolant entre les vecteurs vitesse de quatre pixels voisins du pixel orphelin, dans la mesure où ils ne sont pas eux-mêmes des pixels

orphelins. Ce calcul est réalisé en lisant dans la mémoire M2 les valeurs de la fonction DFD et en lisant dans la mémoire M1 les composantes du vecteur vitesse $\overline{V}$ pour les quatre points voisins dont les coordonnées sont :

(IX',IY'-1), (IX'-1,IY'), (IX'+1,IY'), (IX',IY'+1)

Puis la valeur du vecteur vitesse interpolée $\vec{V_s}$ est calculée selon la formule :

$$\vec{V_s}(IX',IY') = \frac{1}{A_{00}+A_{01}+A_{10}+A_{11}} (A_{00}.\vec{V}(IX',IY') + A_{01}.\vec{V}(IX'-1,IY') + A_{10}.\vec{V}(IX'+1,IY') + A_{11}.\vec{V}(IX',IY')) \quad (9)$$

avec

$A_{00}$ = 0 si DFD(IX',IY'-1) = 255

$A_{00}$ = 1 sinon.

$A_{01}$ = 0 si DFD(IX'-1,IY') = 255

$A_{01}$ = 1 sinon.

$A_{10}$ = 0 si DFD(IX'+1,IY') = 255

$A_{10}$ = 1 sinon.

$A_{11}$ = 0 si DFD(IX',IY'+1) = 255

$A_{11}$ = 1 sinon.

Et $\vec{V_s}$(IX',IY') = (0,0) si $A_{00}$ = $A_{01}$ = $A_{10}$ = $A_{11}$ = 0, c'est-à-dire si les 4 pixels voisins sont aussi des pixels orphelins.

Les vecteurs $\vec{PB}$ et $\vec{PA}$ sont ensuite calculés conformément aux formules (5) et (6) dans lesquelles le vecteur $\vec{V}$ est constitué par le vecteur interpolé $\vec{V_s}$. Puis les valeurs de luminance L($\vec{PA}$,$T_a$) et L($\vec{PB}$,$T_b$) sont déterminées ensuite par une interpolation spatiale dans les trames $T_a$ et $T_b$, conformément à l'organigramme de la figure 5 décrit précédemment. Puis la valeur de la fonction DFD est calculée pour les points de base A et B ainsi déterminés.

Si cette valeur de la fonction DFD est inférieure à la valeur de seuil, 7, cela signifie que le vecteur vitesse interpolé $\vec{V_s}$ constitue une estimation convenable du vecteur vitesse du pixel orphelin considéré. Il peut donc être associé à ce pixel orphelin. Le procédé consiste alors à calculer la valeur de la luminance interpolée du pixel orphelin considéré, L(IX',IY',$T_j$) selon la formule (9).

Si la valeur de la fonction DFD est supérieure à la valeur de seuil, cela signifie que le vecteur vitesse interpolé ne convient pas et ne peut être associé au pixel orphelin considéré. En dernier recours, un vecteur vitesse nul est associé au pixel orphelin. Les deux points de base de l'interpolation temporelle, A et B, ont alors les mêmes coordonnées (IX',IY') que le centre du pixel à interpoler, par conséquent les vecteurs $\vec{PB}$ et $\vec{PA}$ sont tous les deux égaux et ont pour composantes (IX',IY'). Les valeurs de luminance L($\vec{PA}$,$T_a$) et L($\vec{PB}$,$T_b$) sont ensuite déterminées sans interpolation spatiale dans les trames $T_a$ et $T_b$ , car IX' et IY' sont des valeurs entières. Elles sont lues dans les mémoires MA et MB respectivement aux adresses correspondant à (IX',IY'). Puis la valeur de luminance interpolée L(IX',IY',$T_j$) est calculée selon la formule :

$$L_{interpolée} = \frac{T_b-T_j}{T_b-T_a} . L(\vec{PA},T_a) + \frac{T_j-T_a}{T_b-T_a} L(\vec{PB},T_b) \quad (10)$$

Chaque fois qu'une valeur de luminance interpolée L(IX',IY',$T_j$) a été calculée, cette valeur est fournie, par exemple, à une mémoire de la trame stockant les valeurs interpolées de la trame $T_j$ en attendant une utilisation de ces valeurs de luminance. Puis la valeur de la coordonnée IX' est comparée à sa valeur maximale M pour déterminer si elle a atteint cette valeur maximale. Si elle ne l'a pas atteinte les opérations précédentes sont réitérées à partir de l'incrémentation de IX'. Si elle a atteint sa valeur maximale, la valeur de la seconde coordonnée IY' est comparée à sa valeur maximale N. Si elle n'a pas atteint sa valeur maximale, les opérations précédentes sont réitérées à partir de l'incrémentation de IY'. Si elle a atteint sa valeur maximale, cela signifie que tous les pixels à interpoler ont été balayés et que, par conséquent, le traitement d'interpolation temporelle de la trame $T_j$ est terminée.

La figure 8 représente un organigramme de la première phase du procédé selon l'invention, selon une deuxième variante de mise en oeuvre, permettant de simplifier les calculs et de supprimer la mémoire M2

car cette variante n'utilise pas la fonction DFD. La première phase débute par une initialisation de la mémoire M1 avec la valeur (255, 255) qui constitue la valeur maximale des composantes du vecteur vitesse associé à chaque pixel à interpoler. En outre l'ordonnée IY des pixels de la trame porteuse du mouvement $T_i$ est initialisée à zéro. Puis cette ordonnée IY est incrémentée d'une unité, et l'abscisse IX des pixels de la trame porteuse du mouvement $T_i$ est initialisée à zéro. Puis cette abscisse est incrémentée d'une unité. La valeur des composantes du vecteur vitesse $\vec{V}(IX,IY,T_i)$ est lue dans la mémoire MI puis est utilisée pour calculer les composantes du vecteur

$$\vec{PE_j}$$

et les composantes du vecteur

$$\vec{PF_j} .$$

Puis ce vecteur vitesse est inscrit dans la mémoire M1 à l'adresse correspondant aux composantes du vecteur

$$\vec{PF_j},$$

c'est-à-dire à l'adresse correspondant aux coordonnées du pixel fils.

Puis la valeur de la coordonnée IX est comparée à sa valeur maximale M. Si celle-ci n'est pas atteinte les opérations précédentes sont réitérées à partir de l'incrémentation de IX. Si elle est atteinte, la valeur de la coordonnée IY est comparée à sa valeur maximale N. Si celle-ci est atteinte, la première phase est terminée et une seconde phase commence. Si IY n'a pas atteint sa valeur maximale N, les opérations précédentes sont réitérées à partir de l'incrémentation de IY.

La figure 9 représente un organigramme de la seconde phase de la seconde variante de mise en oeuvre du procédé selon l'invention. Cette seconde phase commence par une initialisation à zéro de la coordonnée IY′ des pixels à interpoler. Puis elle consiste à incrémenter la coordonnée IY′ et à initialiser à zéro la coordonnée IX′. Puis elle consiste à incrémenter d'une unité la coordonnée IX′ et à lire le vecteur vitesse $\vec{V}(IX',IY',T_j)$ dans la mémoire M1 à une adresse correspondant aux coordonnées (IX′,IY′).

Les composantes de ce vecteur vitesse sont comparées chacune à la valeur 255 qui est la valeur initiale chargée dans la mémoire M1. Si les composantes du vecteur vitesse sont égales à leur valeur initiale, cela signifie qu'aucun vecteur vitesse n'a été associé au pixel de coordonnées (IX′,IY′). Celui-ci est donc un pixel orphelin et il est nécessaire de déterminer d'une autre façon le vecteur vitesse à associer à ce pixel. Un vecteur vitesse interpolé $\vec{V_s}$ est calculé par une interpolation spatiale à partir des vecteurs vitesse de quatre pixels voisins du pixel orphelin. Les vecteurs vitesse de ces quatre pixels voisins sont lus dans la mémoire M1 puis sont combinés linéairement conformément à l'équation (9) mais en prenant :

$A_{00} = 0$ si $\vec{V}(IX'-1,IY') = (255,255)$

$A_{00} = 1$ sinon.

$A_{01} = 0$ si $\vec{V}(IX'-1,IY') = (255,255)$

$A_{01} = 1$ sinon.

$A_{10} = 0$ si $\vec{V}(IX'+1,IY') = (255,255)$

$A_{10} = 1$ sinon.

$A_{11} = 0$ si $\vec{V}(IX',IY'+1) = (255,255)$

$A_{11} = 1$ sinon.

Et $\vec{V_s}(IX',IY') = (0,0)$ si $A_{00} = A_{01} = A_{10} = A_{11} = 0$, c'est-à-dire si les quatre pixels voisins sont eux aussi des pixels orphelins.

Il est à remarquer que l'absence d'utilisation de la fonction DFD n'empêche pas de détecter si un pixel à interpoler est un pixel orphelin ou non, grâce à l'initialisation de la mémoire M1 avec la valeur (255,255) qui permet de discriminer les valeurs de vecteur vitesse qui n'existent pas. Par contre, la première phase ne distingue pas le meilleur pixel père lorsqu'un pixel à interpoler possède plusieurs pixels pères, par conséquent le vecteur vitesse associé est celui correspondant au dernier pixel père trouvé, pour un pixel à interpoler donné, lorsqu'il a plusieurs pixels pères.

Lorsque le vecteur vitesse $\vec{V}(IX',IY',T_j)$ a des composantes différentes de 255, cela signifie que le pixel à interpoler a un vecteur vitesse associé qui a été déterminé au cours de la première phase. Le procédé

consiste ensuite à calculer les vecteurs $\overrightarrow{PB}$ et $\overrightarrow{PA}$ selon les formules (5) et (6) pour le vecteur vitesse lu dans la mémoire M1 ou pour le vecteur vitesse $\overrightarrow{V_s}$ interpolé, associé au pixel (IX',IY'). Puis il consiste à calculer les valeurs de luminance $L(\overrightarrow{PA},T_a)$ et $L(\overrightarrow{PB},T_b)$. Lorsque le vecteur vitesse n'est pas nul ce calcul est réalisé par une interpolation spatiale dans les trames $T_a$ et $T_b$ respectivement, selon l'organigramme représenté sur la figure 5 et décrit précédemment. Lorsque le vecteur vitesse est nul, ces deux valeurs de luminance sont lues dans les mémoires MA et MB à l'adresse correspondant à (IX',IY'). Puis le procédé consiste à calculer la valeur de luminance interpolée $L(IX',IY',T_j)$, selon la formule (10). La valeur de luminance interpolée est ensuite fournie, par exemple, à une mémoire de trames pour être stockée en attendant une utilisation de la trame interpolée $T_j$ .

Puis la valeur de la coordonnée IX' est comparée à sa valeur maximale M. Si la valeur maximale n'est pas atteinte, les opérations précédentes sont réitérées à partir de l'incrémentation de IX'. Sinon la valeur de la coordonnée IY' est comparée à sa valeur maximale N. Si cette valeur maximale n'est pas atteinte, les opérations précédentes sont réitérées à partir de l'incrémentation de IY'. Lorsque IY' a atteint la valeur maximale N, le traitement d'interpolation de la trame $T_j$ est terminé.

La figure 10 représente un organigramme de la première phase du procédé selon l'invention pour une troisième variante de mise en oeuvre de ce procédé. Cette troisième variante de mise en oeuvre ne nécessite pas de calcul de la fonction DFD et ne nécessite pas de mémoire M2, de même que la seconde variante. Elle présente, par rapport à la seconde variante, l'avantage de permettre un stockage des valeurs de luminance interpolées sans avoir une mémoire de la trame supplémentaire, car cette troisième variante permet de réutiliser la mémoire M1 pour le stockage des valeurs de luminance interpolées. Au cours de la première phase, dans cette troisième variante, au lieu de stocker dans la mémoire M1 les vecteurs vitesses associés aux pixels fils au fur et à mesure du balayage des pixels pères de la trame porteuse du mouvement, elle consiste à calculer et à stocker dans M1 les valeurs de luminance interpolées correspondant à ces pixels fils. Ainsi, au cours de la deuxième phase il ne reste plus qu'à calculer une valeur de luminance interpolée pour chaque pixel orphelin seulement. La valeur des composantes des vecteurs vitesse des pixels voisins n'étant pas stockée, il n'est pas possible d'utiliser une interpolation pour calculer un vecteur vitesse à associer à chaque pixel orphelin. Le vecteur vitesse associé au pixel orphelin est alors pris nul.

La première phase de cette troisième variante débute par une initialisation de la mémoire M1 avec la valeur 255 qui correspond à la valeur maximale de la luminance et qui est donc facile à discriminer pour détecter les pixels orphelins, ceux-ci étant discriminables par le fait que la valeur correspondante de la luminance, stockée dans la mémoire M1, reste égale à 255 à la fin de la première phase du procédé. Elle débute aussi par une initialisation de la coordonnée IY à zéro.

Puis elle consiste à incrémenter IY d'une unité et à initialiser à zéro la coordonnée IX. Elle consiste ensuite à incrémenter d'une unité la coordonnée IX, puis à lire le vecteur vitesse $\vec{V}(IX,IY,T_i)$ dans la mémoire MI ; puis à calculer les vecteurs

$$\overrightarrow{PE_j},\ \overrightarrow{PF_j},$$

$\overrightarrow{PB}$, $\overrightarrow{PA}$, selon les formules (4) à (6). Puis elle consiste à calculer les valeurs de luminance $L(\overrightarrow{PA},T_a)$ et L-$(\overrightarrow{PB},T_b)$ par une interpolation spatiale dans les trames $T_a$ et $T_b$ , conformément à l'organigramme de la figure 5 décrit précédemment. Puis elle consiste à calculer la valeur de luminance interpolée

$$L(\overrightarrow{PF_j},T_j),$$

correspondant au pixel fils centré sur le point $F_j$, selon la formule (10) ; à écrire cette valeur de luminance dans la mémoire M1 à une adresse correspondant aux composantes du vecteur

$$\overrightarrow{PF_j}.$$

La première phase consiste ensuite à tester la valeur de la coordonnée IX pour détecter si elle a atteint sa valeur maximale M. Si la valeur M n'est pas atteinte, elle consiste à réitérer les opérations précédentes à partir de l'incrémentation de IX. Lorsque IX a atteint la valeur maximale M, elle consiste à comparer la

valeur de la coordonnée IY à sa valeur maximale N. Si IY a atteint la valeur N, la première phase est terminée. Sinon, les opérations précédentes sont réitérées à partir de l'incrémentation de la coordonnée IY.

La figure 11 représente un organigramme de la seconde phase de la troisième variante de mise en oeuvre du procédé selon l'invention. Cette seconde phase consiste tout d'abord à initialiser à zéro la coordonnée IY′ d'un pixel de la trame à interpoler $T_j$ ; puis à incrémenter cette coordonnée IY′ d'une unité et à initialiser à zéro une seconde coordonnée IX′. Puis elle consiste à incrémenter la coordonnée IX′ d'une unité ; à lire la valeur de luminance stockée dans la mémoire M1 à l'adresse correspondant aux coordonnées (IX′,IY′) ; et à comparer cette valeur de luminance à la valeur 255 qui est la valeur chargée initialement dans la mémoire M1.

Si la valeur de luminance est différente de 255 cela signifie qu'une valeur de luminance a été déterminée au cours de la première phase, pour le pixel à interpoler de coordonnées (IX′, IY′). Si la valeur de luminance est égale à 255, cela signifie que ce pixel à interpoler n'a pas de pixel père dans la trame porteuse du mouvement $T_i$. Dans ce cas, un vecteur vitesse nul est attribué à ce pixel orphelin, et les vecteurs $\overrightarrow{PA}$ et $\overrightarrow{PB}$ ont des composantes égales à celles du vecteur portant le centre du pixel à interpoler, c'est-à-dire (IX′,IY′).Ensuite les valeurs de luminance des deux points de base de l'interpolation temporelle, $L(\overrightarrow{PA},T_a)$ et $L(\overrightarrow{PB},T_b)$ sont lues dans les mémoires MA et MB à l'adresse correspondant à (IX′,IY′). Puis une valeur de luminance interpolée $L(IX',IY',T_j)$ est calculée selon la formule (9).

Enfin, la valeur de luminance interpolée est inscrite dans la mémoire M1 à l'adresse correspondant aux coordonnées (IX′,IY′) pour y être stockée en attendant une utilisation des valeurs de luminance de la trame interpolée $T_j$ . A la fin du traitement de tous les pixels de la trame à interpoler, la mémoire M1 sera remplie par les valeurs de luminance interpolées. La mémoire M1 joue donc le rôle de la mémoire de la trame supplémentaire qui était nécessaire pour stocker les valeurs de luminance interpolées selon la première et la deuxième variante de mise en oeuvre, décrites précédemment.

Puis cette seconde phase consiste à comparer la valeur de la coordonnée IX′ à sa valeur maximale M. Si IX′ n'a pas atteint sa valeur maximale, la deuxième phase consiste ensuite à réitérer les opérations précédentes à partir de l'incrémentation de IX′. Si IX' a atteint sa valeur maximale, la seconde phase consiste ensuite à comparer la valeur de la coordonnée IY′ à sa valeur maximale M. Si IY′ n'a pas atteint sa valeur N, les opérations précédentes sont réitérées à partir de l'incrémentation de IY′. Si IY' a atteint sa valeur maximale, le traitement de tous les pixels à interpoler est terminé.

La figure 12 représente le schéma synoptique d'une première partie d'un dispositif pour la mise en oeuvre du procédé selon l'invention, conformément à la première variante décrite précédemment. Cette première partie comporte : une borne d'entrée 1 ; un dispositif de multiplexage 2 ; un dispositif d'estimation de mouvement 3 ; un séquenceur 4 ; une mémoire 5 dite mémoire MI ; un dispositif 7 de calcul du vecteur

$$\overrightarrow{PF_j} \;;$$

un bus d'adresses et de données, 9 ; un dispositif 10 de calcul ; une mémoire MA, pour stocker les valeurs de luminance de la trame correspondant à l'instant $T_a$ ; une mémoire MB pour stocker les valeurs de luminance de la trame correspondant à l'instant $T_b$ ; et des moyens de calcul 5a, pour associer un vecteur vitesse à chaque pixel à interpoler ayant au moins un pixel père.

Ces moyens de calcul 5a comportent : un dispositif 6 de calcul du vecteur $\overrightarrow{PA}$ ; un dispositif 8 de calcul du vecteur $\overrightarrow{PB}$ ; un dispositif 10 de calcul de $L(\overrightarrow{PA},T_a)$ ; un dispositif 11 de calcul de $L(\overrightarrow{PB},T_b)$ ; un soustracteur 14 ; deux comparateurs 15 et 16 ; deux multiplexeurs, 17 et 18, à deux entrées et une sortie ; une porte logique ET 19 ; un dispositif d'initialisation 20 ; une mémoire M1 pour stocker les vecteurs vitesse associés aux pixels à interpoler ; et une mémoire M2 pour stocker les valeurs de la fonction DFD.

Le dispositif de multiplexage 2 possède une entrée reliée à la borne d'entrée 1 du dispositif d'interpolation pour recevoir une suite de valeurs de luminance correspondant à une suite de trames connues constituée par des trames de trames de télévision classique. Ces valeurs de luminance sont fournies, par exemple, par une caméra de télévision et un convertisseur analogique-numérique. Le dispositif 2 possède une sortie reliée au bus 9, qui est un bus de données, d'adresses, et de commandes, pour transmettre les valeurs de luminance soit à la mémoire MA soit à la mémoire MB. Dans l'exemple considéré, la trame correspondant à l'instant $T_a$ est supposée précéder la trame correspondant à l'instant $T_b$ , mais lors du traitement d'une suite de trames les mémoires MA et MB sont utilisées alternativement pour stocker la trame la plus récente.

Le séquenceur 4 fournit des signaux de commande à l'ensemble de cet exemple de réalisation et notamment au dispositif 2, en synchronisme avec les valeurs de luminance appliquées à la borne d'entrée

1. Le dispositif 3 d'estimation de mouvement possède une entrée-sortie reliée au bus 9 pour lui permettre de commander la lecture de valeurs de luminance dans les mémoires MA et MB, et l'écriture des valeurs des composantes du vecteur vitesse des pixels de la trame $T_i$ dans la mémoire MI.

Le dispositif 3 est réalisé, par exemple, conformément à la description du brevet US n° 4 383 272. Il fournit une estimation de mouvement constituée par les composantes d'un vecteur vitesse pour chaque pixel d'une trame correspondant à un instant $T_i$ compris entre les instants $T_a$ et les instants $T_b$ , en fonction des valeurs de luminance des trames connues aux instants $T_a$ et $T_b$ . La mémoire MI possède une entrée d'adresse reliée à une sortie du séquenceur 4 pour recevoir une adresse constituée par les coordonnées (IX,IY) d'un pixel de la trame porteuse du mouvement $T_i$ . Le séquenceur 4 fournit une suite de coordonnées correspondant à l'ordre de balayage habituel d'une trame de la trame de télévision. Cette suite de coordonnées est fournie aussi à une première entrée du dispositif de calcul 7. Une seconde entrée du dispositif de calcul 7 est reliée à une sortie de données de la mémoire MI pour recevoir la valeur des composantes du vecteur vitesse $\vec{V}(IX,IY,T_i)$ lue dans la mémoire MI à l'adresse (IX,IY). La valeur de ces composantes est appliquée aussi à une entrée du dispositif de calcul 6, à une entrée du dispositif de calcul 8, et à une première entrée du multiplexeur 18.

Les dispositifs de calcul 6, 7, et 8 fonctionnent en parallèle pour déterminer respectivement les composantes des vecteurs $\vec{PA}$,

$$\vec{PF_j}$$

et $\vec{PB}$. Pour chaque pixel de coordonnées (IX,IY) dans la trame $T_i$ porteuse du mouvement, le dispositif de calcul 7 détermine le centre $F_j$ d'un pixel fils, s'il en existe un ; les dispositifs de calcul 6 et 8 déterminent les coordonnées des points de base A et B pour une interpolation temporelle, en vue de calculer une valeur de luminance pour le pixel fils. Les dispositifs 6 et 8 fournissent respectivement les composantes du vecteur $\vec{PA}$ et du vecteur $\vec{PB}$ à une entrée du dispositif de calcul 10 et à une entrée du dispositif de calcul 11.

Le dispositif de calcul 10 possède une sortie et une entrée reliées respectivement à une entrée d'adresse et à une sortie de données de la mémoire MA, pour commander dans la mémoire MA la lecture des valeurs de luminance nécessaires pour une interpolation spatiale à partir des pixels voisins du point A dans la trame $T_a$ . De même, le dispositif 11 possède une sortie et une entrée reliée respectivement à une entrée d'adresse et à une sortie de données de la mémoire MB pour y lire les valeurs de luminance nécessaires pour une interpolation spatiale entre les pixels voisins du point B dans la trame $T_b$ . Les valeurs de luminance $L(\vec{PA},T_a)$ et $L(\vec{PB},T_b)$ calculées respectivement par les dispositifs 10 et 11 sont appliquées respectivement à deux entrées du soustracteur 14 pour calculer une valeur de la fonction DFD. Le soustracteur 14 fournit une valeur algébrique dont la valeur absolue constitue la valeur de la fonction DFD.

Celle-ci est appliquée à une première entrée du multiplexeur 17 et à des premières entrées des comparateurs 15 et 16. Une seconde entrée du comparateur 15 reçoit une valeur DFD' de la fonction DFD lue dans la mémoire M2 à une adresse constituée par les composantes du vecteur

$$\vec{PF_j},$$

c'est-à-dire correspondant au pixel fils en cours de traitement. Le comparateur 16 possède une seconde entrée recevant une valeur de seuil : 7. Les comparateurs 15 et 16 ont chacun une sortie reliée à une entrée de la porte logique ET 19 pour valider celle-ci lorsque la valeur de la fonction DFD fournie par le soustracteur 14 est inférieure à la valeur de seuil 7 et inférieure à la valeur DFD' lue dans la mémoire M2.

La porte 19 possède une sortie reliée à une entrée de commande du multiplexeur 17 et à une entrée de commande du multiplexeur 18. La seconde entrée du multiplexeur 17 est reliée à la sortie de données la mémoire M2. La première et la seconde entrée du multiplexeur 18 sont reliées respectivement à la sortie de données de la mémoire MI fournissant le vecteur $\vec{V}(IX,IY,T_i)$, et à une sortie de la mémoire M1 fournissant la valeur des composantes d'un vecteur vitesse lu à l'adresse constituée par les composantes

$$\vec{PF_j}.$$

Les mémoires M1 et M2 possèdent chacune une entrée d'adresse reliée à la sortie du dispositif de calcul 7 pour recevoir la valeur des composantes du vecteur

$$\overrightarrow{PF_j}.$$

Dans un premier temps le séquenceur 4 commande dans les mémoires M1 et M2, une lecture à l'adresse constituée par les composantes du vecteur

$$\overrightarrow{PF_j}.$$

Cette lecture permet de connaître la valeur DFD′ de la fonction DFD et la valeur des composantes du vecteur vitesse trouvée précédemment si le pixel centré sur le point $F_j$ a au moins un pixel père ayant été déterminé précédemment.

Si la valeur de la fonction DFD fournie par le soustracteur 14, pour le pixel père de coordonnées (IX,IY), est inférieure à 7 et inférieure à la valeur DFD' déterminée pour un autre pixel père trouvé précédemment, alors le signal fourni par la sortie de la porte 19 commande les multiplexeurs 17 et 18 pour transmettre respectivement la valeur de la fonction DFD fournie par le soustracteur 14 et le vecteur vitesse fourni par la sortie de la mémoire MI.

Si la valeur de la fonction DFD fournie par la sortie du soustracteur 14 est supérieure à 7 ou bien est supérieure à la valeur DFD' lue dans la mémoire M2, alors les multiplexeurs 17 et 18 transmettent respectivement la valeur DFD' fournie par la mémoire M2 et le vecteur vitesse fourni par la mémoire M1. La sortie du multiplexeur 17 et la sortie du multiplexeur 18 sont reliées respectivement à des entrées de données des mémoires M2 et M1.

Dans un second temps, le séquenceur 4 commande une écriture dans ces mémoires pour inscrire la valeur de la fonction DFD transmise par le multiplexeur 17 et le vecteur vitesse transmis par le multiplexeur 18. Le contenu des mémoires M2 et M1 est donc renouvellé lorsqu'un meilleur pixel père est détecté.

Un dispositif d'initialisation 20 possède deux sorties reliées respectivement à l'entrée d'adresse et à l'entrée de données de la mémoire M2 pour lui fournir une suite de valeurs d'adresse permettant d'inscrire la valeur 255 à toutes les adresses pendant une phase d'initialisation précédant le traitement de chaque trame. Pendant cette phase d'initialisation, le dispositif 20 et la mémoire M2 sont commandés par le séquenceur 4 pour réaliser cette écriture. L'entrée d'adresse et l'entrée de données de la mémoire M2 sont reliées d'autre part à une borne d'entrée 26 et à une borne d'entrée 28 qui sont reliées à la seconde partie de cet exemple de réalisation. La sortie de données de la mémoire M2 et la sortie de données de la mémoire M1 sont reliées respectivement à deux bornes de sorties 27 et 30, reliées à la seconde partie de cet exemple de réalisation. L'entrée d'adresse et l'entrée de données de la mémoire M1 sont reliées respectivement à la borne d'entrée 28 et à une borne d'entrée 29, reliées à la seconde partie de cet exemple de réalisation.

La figure 13 représente un schéma synoptique plus détaillé des dispositifs de calcul 6, 7, 8, 10 et 11. Le dispositif 6 comporte un multiplicateur 61, un dispositif 62 de correction de parité de trames, et un additionneur 63. L'entrée du dispositif 6, recevant la valeur des composantes du vecteur $\overline{V}(IX,IY,T_i)$, est reliée à une première entrée du multiplicateur 61. Une seconde entrée du multiplicateur 61 reçoit en permanence la valeur $-(T_j-T_a)$. Une sortie du multiplicateur 61 est reliée à une entrée du dispositif 62 pour lui fournir la valeur des composantes d'un vecteur : $-\overrightarrow{V}.(T_j-T_a)$.

Le dispositif 62 additionne à la valeur de ces composantes, la valeur des composantes du vecteur $\overrightarrow{Z_a}$ qui est fonction de la parité de la trame en cours d'interpolation et de la trame $T_a$. Le dispositif 62 est relié, par des liaisons non représentées, à des sorties du séquenceur 4 fournissant des signaux de commande fonctions de la parité de ces deux trames. Le dispositif 62 peut être constitué d'additionneurs et d'une mémoire morte stockant la valeur des composantes du vecteur $\overrightarrow{Z_a}$, cette mémoire morte recevant une adresse constituée par les signaux de commande fournis par le séquenceur 4. L'additionneur 63 possède : une entrée reliée à la sortie du dispositif 62 ; une autre entrée reliée à la sortie du dispositif de calcul 7 pour recevoir la valeur des composantes du vecteur

$$\overrightarrow{PF_j} ;$$

et une sortie constituant la sortie du dispositif 6, sortie fournissant la valeur des composantes du vecteur $\overrightarrow{PA}$.

Le dispositif de calcul 8 a une structure très semblable à celle du dispositif de calcul 6. Il comporte un multiplicateur 81, un dispositif 82 de correction de parité de trames, et un additionneur 83. Le multiplicateur 81 reçoit la valeur ($T_b$-$T_j$) au lieu de la valeur -($T_j$-$T_a$), et le dispositif 82 additionne la valeur des composantes du vecteur $\overrightarrow{Z_b}$ , au lieu de la valeur des composantes du vecteur $\overrightarrow{Z_a}$. La valeur des composantes du vecteur $\overrightarrow{Z_b}$ est fonction de la parité de la trame $T_j$ et de la trame $T_b$. Le dispositif 82 est relié au séquenceur 4 par des liaisons non représentées, fournissant des signaux de commande fonction de la parité de ces trames.

Le dispositif de calcul 7 comporte un multiplicateur 71, un soustracteur 72, un dispositif 73 de correction de parité de trames, et un dispositif 74 de calcul de la valeur entière la plus proche (VEPP) d'une valeur. Une première entrée du multiplicateur 71 constitue l'entrée du dispositif 7 recevant la valeur des composantes du vecteur $\overrightarrow{V}$(IX,IY,$T_i$). Une seconde entrée du multiplicateur 71 reçoit en permanence la valeur ($T_i$-$T_j$). Une sortie du multiplicateur 71 est reliée à une première entrée du soustracteur 72 et lui fournit la valeur des composantes du vecteur $\overrightarrow{V}$. ($T_i$-$T_j$). Une seconde entrée du soustracteur 12 reçoit les coordonnées (IX,IY) fournies par le séquenceur 4 et constituant les composantes du vecteur

$$\overrightarrow{PC_j}.$$

Une sortie du soustracteur 72 fournit à une entrée du dispositif 73 la valeur des composantes du vecteur

$$\overrightarrow{PE_j}$$

calculée conformément à la formule (4).

Le dispositif 73 ajoute à la valeur de ces composantes la valeur des composantes du vecteur $\overrightarrow{Z_j}$ qui est fonction de la parité de la trame $T_j$ et de la trame $T_i$. Le dispositif 73 peut être constitué comme les dispositifs 62 et 82. Il est relié à des sorties du séquenceur 4 par des liaisons non représentées lui fournissant des signaux de commande fonction de la parité des trames $T_j$ et $T_i$. Une sortie du dispositif 73 est reliée à une entrée du dispositif 74.

Le dispositif 74 additionne 0,5 à chacune des composantes du vecteur fourni par la sortie du dispositif 73 puis prend la partie entière de la somme obtenue. Le dispositif 74 peut être constitué de deux additionneurs additionnant chacun la valeur constante 0,5. La partie entière est extraite en mettant à 0 les bits constituant la partie fractionnaire. Une sortie du dispositif 74 constitue la sortie du dispositif 7 et fournit la valeur de deux composantes constituant le vecteur

$$\overrightarrow{PF_j}.$$

La valeur de ces composantes est utilisée notamment comme valeur d'adresse pour les mémoires M1 et M2, lors de l'écriture dans ces mémoires de la valeur de la fonction DFD et des composantes du vecteur vitesse, correspondant au pixel fils centré sur le point $F_j$ .

Les dispositifs de calcul 10 et 11 ont une structure analogue, mais le dispositif 10 est couplé à la mémoire MA alors que le dispositif 11 est couplé à la mémoire MB. Le dispositif 10 comporte : un dispositif 101 de calcul de la valeur entière la plus proche de la valeur des composantes d'un vecteur ; un additionneur 102 ; un soustracteur 103 ; un dispositif de calcul d'adresse 104 ; et un dispositif de calcul 105 qui met en oeuvre la formule (8) et qui sera décrit plus en détails en se référant à la figure 14.

Une entrée du dispositif 101 constitue l'entrée du dispositif 10, et est reliée aussi à une première entrée du soustracteur 103. Une sortie du dispositif 101 est reliée à une première entrée de l'additionneur 102 et à une entrée du dispositif 104 de calcul d'adresses, pour leur fournir la valeur des composantes ($XG_a$,$YG_a$) obtenues en prenant la partie entière de la valeur des composantes du vecteur $\overrightarrow{PA}$. Le dispositif 101 peut être constitué comme le dispositif 74.

L'additionneur 102 possède une seconde entrée recevant en permanence la valeur des composantes d'un vecteur (1,1), et possède une sortie reliée à une seconde entrée du soustracteur 103. Une sortie du soustracteur 103 est reliée à une borne d'entrée 106 du dispositif de calcul 105 pour lui fournir la valeur

des coordonnées relatives du point A : ($\Delta X_a$,$\Delta Y_a$). Le dispositif de calcul 105 possède une seconde borne d'entrée 108 reliée à une sortie de données de la mémoire MA et possède une borne de sortie 107 constituant la sortie du dispositif 10 et reliée à la première entrée du soustracteur 14 pour lui fournir la valeur de luminance $L(\overrightarrow{PA},T_a)$.

Le dispositif 104 de calcul d'adresses possède une entrée reliée à la sortie du dispositif 101 pour recevoir les coordonnées ($XG_a$,$YG_a$) et possède une sortie reliée à une entrée d'adresse de la mémoire MA. Le dispositif 104 fournit quatre adresses successives à la mémoire MA sous l'action d'un signal d'horloge fourni par le séquenceur 4 qui commande quatre lecture successives dans la mémoire A pour lire les valeurs de luminance stockées à des adresses constituées par les coordonnées : ($XG_a+1$,$YG_a+1$) ; ($XG_a$,$YG_a+1$) ; ($XG_a+1$,$YG_a$) ; ($XG_a$,$YG_a$). Le dispositif 103 peut être constitué de quatre registres, de quatre additionneurs, et d'un multiplexeur, commandés par des signaux de commande fournis par le séquenceur 4.

Le dispositif de calcul 11 comprend : un dispositif 111 de calcul de la valeur entière la plus proche des composantes d'un vecteur ; un dispositif 112 de calcul d'adresses ; un additionneur 113 ; un soustracteur 114 ; et un dispositif de calcul 115, ayant des fonctions analogues aux fonctions des éléments 101 à 105 du dispositif de calcul 10.

La figure 14 représente le schéma synoptique d'un exemple de réalisation du dispositif de calcul 105. Il comporte : six registres, 120 à 123 et 133, 135 ; huit multiplicateurs, 124 à 131 ; un additionneur 132 ; et deux soustracteurs 134 et 136. Le dispositif 105 met en oeuvre la formule (8). La borne d'entrée 106 est reliée à des entrées des registres 120 à 123 qui stockent respectivement les quatre paires de coordonnées appliquées à la borne d'entrée 106. La borne d'entrée 108 est reliée à des entrées des registres 133 et 135 qui stockent respectivement les valeurs $\Delta X_a$ et $\Delta Y_a$ . Les sorties des registres 120 à 123 sont reliées respectivement à des premières entrées des multiplicateurs 124, 126, 128, 130. La sortie du registre 133 est reliée à : une première entrée du soustracteur 134, une seconde entrée du multiplicateur 126, et une seconde entrée du multiplicateur 130. La sortie des multiplicateurs 124, 126, 128, 130 est reliée respectivement à une première entrée du multiplicateur 125, du multiplicateur 127, du multiplicateur 129, et du multiplicateur 131. La sortie du registre 135 est reliée à une seconde entrée du multiplicateur 129, à une seconde entrée du multiplicateur 131, et à une première entrée du soustracteur 136. Le soustracteur 134 possède une seconde entrée recevant en permanence la valeur 1 et possède une sortie reliée à une seconde entrée du multiplicateur 124 et à une seconde entrée du multiplicateur 128. Le soustracteur 136 possède une seconde entrée recevant en permanence la valeur 1 et possède une sortie reliée à une seconde entrée du multiplicateur 125 et à une seconde entrée du multiplicateur 127. Les sorties des multiplicateurs 125, 127, 129, 131, sont reliées respectivement à quatre entrées de l'additionneur 132. Une cinquième entrée de l'additionneur 132 reçoit en permanence la valeur 0,5. Une sortie de l'additionneur 132 est reliée à la borne de sortie 107.

Les soustracteurs 134 et 136 fournissent respectivement les valeurs $\Delta X_a$-1 et $\Delta Y_a$-1. Les multiplicateurs 124 et 125 calculent le premier terme de la formule (8). Les multiplicateurs 126 et 127 calculent le second terme. Les multiplicateurs 128 et 129 calculent le troisième terme. Les multiplicateurs 130 et 131 calculent le quatrième terme. L'additionneur 132 fait la somme de ces quatre termes et du terme constant 0,5.

La figure 15 représente le schéma synoptique de la seconde partie de l'exemple de réalisation d'un dispositif pour la mise en oeuvre de la première variante du procédé selon l'invention. Cette seconde partie correspond à la seconde phase du procédé. Elle comporte notamment des moyens de calcul 5b pour déterminer un vecteur vitesse interpolé à partir des vecteurs vitesse des pixels voisins du pixel à interpoler lorsque celui-ci n'a pas de pixel père ou bien lorsque ses pixels pères n'ont pas été validés.

Elle comporte en outre : des moyens de calcul 49 pour associer un vecteur vitesse nul au pixel à interpoler lorsque le vecteur vitesse interpolé n'est pas validé, et pour déterminer les valeurs de luminance $L(\overrightarrow{PA},T_a)$ et $L(\overrightarrow{PB},T_b)$ des deux points de base A et B, en fonction du vecteur vitesse associé au pixel à interpoler ; et des moyens de calcul 50 pour calculer une valeur de luminance interpolée, en fonction des valeurs de luminance des deux points de base.

Les moyens de calcul 5b comportent : un générateur d'adresses 31 ; deux registres, 32 et 33 ; un comparateur 34 ; un multiplexeur 35, à deux entrées et une sortie ; et un dispositif de calcul 36 pour calculer un vecteur vitesse interpolée $\overrightarrow{V_s}$ .

Une sortie du générateur d'adresses 31 et une borne de sortie 58 du dispositif de calcul 36 sont reliées à la borne d'entrée 28 des moyens de calcul 5a, qui est reliée aux entrées d'adresses des mémoires M1 et M2. Le générateur d'adresses 31 fournit une suite d'adresses constituées par des coordonnées (IX',IY') correspondant à un balayage systématique de tous les pixels à interpoler de la trame $T_j$. Chacune de ces adresses permet de lire une valeur DFD(IX',IY') de la fonction DFD dans la mémoire M2 et un vecteur vitesse $\overrightarrow{V}$(IX',IY') dans la mémoire M1, correspondant à un pixel à interpoler. Une entrée de données du

registre 32 et une borne d'entrée 57 du dispositif de calcul 36 sont reliées à la borne de sortie 27 des moyens de calcul 5a, qui reçoit la valeur DFD(IX′,IY′) lue dans la mémoire M2. Une entrée de données du registre 33 et une borne d'entrée 56 du dispositif de calcul 36 sont reliées à la borne de sortie 30 des moyens de calcul 5a, qui fournit la valeur des composantes du vecteur vitesse $\vec{V}$(IX′,IY′) lu dans la mémoire M1.

La valeur DFD(IX′,IY′) stockée dans le registre 32 est comparée à une valeur de seuil, 255, par le comparateur 34. Une sortie du comparateur 34 est reliée à une entrée de commande du multiplexeur 35. Une sortie du registre 33 est reliée à une première entrée du multiplexeur 35. Une borne de sortie 59 du dispositif de calcul 36 fournit la valeur des composantes d'un vecteur vitesse interpolé $\vec{V_s}$ à une seconde entrée du multiplexeur 35. Une sortie du multiplexeur 35 constitue une sortie des moyens 5b et est reliée à une première entrée des moyens de calcul 49 pour fournir un vecteur vitesse $\vec{V_t}$.

Lorsque la valeur de la fonction DFD fournie par le registre 32 est inférieure à la valeur de seuil 255, le comparateur 34 commande le multiplexeur 35 pour qu'il transmette la valeur des composantes du vecteur $\vec{V}$ stockée dans le registre 33, car ce vecteur vitesse convient. Lorsque la valeur de la fonction DFD est égale à 255, cela signifie que le pixel à interpoler n'a pas de pixel père, par conséquent il est nécessaire de déterminer un vecteur vitesse par une interpolation à partir des vecteurs vitesses des pixels voisins. Le comparateur 34 commande alors le multiplexeur 35 pour qu'il transmette la valeur des composantes du vecteur vitesse interpolé $\vec{V_s}$ fournie par le dispositif de calcul 36.

Un schéma synoptique du dispositif de calcul 36 est représenté sur la figure 16. Il comporte : un générateur d'adresses 150 ; dix registres, 151 à 154 et 165 à 168 ; cinq comparateurs 156 à 159 ; quatre multiplicateurs, 161 à 164 ; deux additionneurs 170 et 171 ; un diviseur 172 ; et un multiplexeur 173, à deux entrées et une sortie.

Le générateur d'adresses 150 possède une entrée reliée à la borne d'entrée 60 pour recevoir la suite des coordonnées (IX′,IY′) de chaque pixel de la trame à interpoler $T_j$ , et il possède une sortie reliée à la borne de sortie 58 pour fournir successivement quatre valeurs de coordonnées (IX",IY") pour chaque pixel à interpoler. Chaque paire de coordonnées (IX",IY") correspondant à un pixel voisin du pixel à interpoler, sur la même colonne ou sur la même ligne de la trame, et constitue une adresse de lecture pour lire dans la mémoire M1 les vecteurs vitesse associés à ces pixels voisins, s'ils ont un vecteur vitesse associé, et pour lire dans la mémoire M2 les valeurs de la fonction DFD correspondant à ces pixels voisins et permettant de savoir s'ils ont un pixel père ou non.

Les registres 151 à 154 ont chacun une entrée de données reliée à la borne d'entrée 56 pour recevoir et stocker les valeurs de la fonction DFD lues dans la mémoire M2 et correspondant aux quatre points voisins respectivement. Les registres 165 à 168 ont chacun une entrée de données reliée à la borne d'entrée 57 pour recevoir la valeur des composantes des vecteurs vitesse lue dans la mémoire M1 et correspondant respectivement aux quatre points voisins. Les registres 151 à 154 ont des sorties reliées respectivement à des premières entrées des comparateurs 156 à 159. Les comparateurs 156 à 159 ont des secondes entrées recevant une valeur constante égale à 255 et ont des sorties reliées respectivement à des premières entrées des multiplicateurs 161 à 164 et respectivement à quatre entrées de l'additionneur 170. Les comparateurs 156 à 159 fournissent chacun un signal logique de valeur 1 lorsque la valeur appliquée à leur première entrée est inférieure à 255 et une valeur zéro lorsque la valeur appliquée à leur première entrée est égale à 255. Les valeurs de ces signaux logiques sont additionnées par l'additionneur 170. La sortie de l'additionneur 170 est reliée à une première entrée du diviseur 172 et à une entrée de commande du multiplexeur 173.

Les sorties des registres 165 à 168 sont reliées respectivement à des secondes entrées des multiplicateurs 161 à 164. Les multiplicateurs 161 à 164 multiplient les valeurs des composantes des vecteurs vitesse par les valeurs des signaux logiques fournies respectivement par les comparateurs 156 à 159, et fournissent le résultat sur des sorties reliées respectivement à quatre entrées de l'additionneur 171. La sortie de l'additionneur 171 est reliée à une seconde entrée du diviseur 172. Une sortie du diviseur 172 fournit la valeur des composantes d'un vecteur vitesse interpolé conformément à la formule (10). Une sortie du multiplexeur 173 est reliée à la borne de sortie 59 du dispositif de calcul 36.

Lorsque la somme calculée par l'additionneur 170 n'est pas nulle, la valeur qu'il fournit sur sa sortie commande le multiplexeur 173 pour qu'il transmette la valeur des composantes du vecteur interpolé. Si la valeur de la somme calculée par l'additionneur 170 est égale à 0, c'est-à-dire si les quatre pixels voisins n'ont pas de pixels pères validés, la valeur 0 appliquée à l'entrée de commande du multiplexeur 173 commande la transmission d'un vecteur nul pour constituer le vecteur $\vec{V_s}$ fourni par le dispositif de calcul 36.

Les moyens de calcul 49, de la seconde partie de l'exemple de réalisation dont le schéma synoptique est représenté sur la figure 15, comportent deux moitiés calculant en parallèle les valeurs de luminance des

points de base A et B et la valeur de la fonction DFD, respectivement pour le vecteur vitesse $\vec{V_t}$ fourni par les moyens de calcul 5b et pour un vecteur vitesse nul. Ces deux calculs en parallèle permettent de gagner du temps lorsque finalement il s'avère que le vecteur vitesse fourni par les moyens de calcul 5b n'est pas validé car la DFD correspondante a une valeur supérieure au seuil 7.

Ces moyens de calcul 49 comportent : un dispositif de calcul 37 pour calculer le vecteur $\overrightarrow{PA}$ pour le vecteur vitesse $\vec{V_t}$ ; un dispositif de calcul 38 pour calculer un vecteur $\overrightarrow{PB}$ pour le vecteur vitesse $\vec{V_t}$ ; un dispositif de calcul 41 pour calculer une valeur de luminance $L(\overrightarrow{PA},T_a)$ pour le vecteur vitesse $\vec{V_t}$ ; un dispositif de calcul 42 pour calculer une valeur de luminance $L(\overrightarrow{PB},T_b)$ pour le vecteur vitesse $\vec{V_t}$ ; un dispositif 43 de lecture de $L(\overrightarrow{PA},T_a)$ à l'adresse (IX',IY') dans la mémoire MA et un dispositif 44 de lecture de $L(\overrightarrow{PB},T_b)$ à l'adresse (IX',IY') dans la mémoire MB, ce qui correspond à un vecteur vitesse nul ; un soustracteur 45 et un soustracteur 46 pour déterminer respectivement la valeur de la fonction DFD pour le vecteur vitesse $\vec{V_t}$ et pour un vecteur vitesse nul ; un comparateur 48 ; et un multiplexeur 47 à huit entrées et quatre sorties.

Le dispositif de calcul 37 est semblable au dispositif de calcul 6 décrit précédemment et représenté sur la figure 13. Le dispositif de calcul 38 est semblable au dispositif de calcul 8 décrit précédemment et représenté sur la figure 13. Les dispositifs de calcul 41 et 42 sont respectivement semblables aux dispositifs de calcul 10 et 11 décrits précédemment et représentés sur la figure 13. Les dispositifs de lecture 43 et 44 ont chacun une entrée-sortie reliée au bus 9. Ils ont une structure très simple constituée de registres tampons commandés par des signaux fournis par le séquenceur 4, et acheminés par des liaisons non représentées.

Les dispositifs de calcul 37 et 38 ont chacun leur entrée qui est reliée à la première entrée des moyens de calcul 49 pour recevoir la valeur des composantes du vecteur $\vec{V_t}$. Les sorties des dispositifs de calcul 37 et 38 sont reliées respectivement aux entrées des dispositifs de calcul 41 et 42. La sortie du dispositif 41 est reliée à une première entrée du soustracteur 45 et à une entrée notée a1 du multiplexeur 47. La sortie du dispositif 42 est reliée à une seconde entrée du soustracteur 45 et à une entrée notée b1 du multiplexeur 47. La sortie du dispositif 43 est reliée à une première entrée du soustracteur 46 et à une entrée notée a2 du multiplexeur 47. La sortie du dispositif 44 est reliée à une seconde entrée du soustracteur 46 et à une entrée notée b2 du multiplexeur 47.

La sortie du soustracteur 45 est reliée à une première entrée du comparateur 48 et à une entrée notée d1 du multiplexeur 47. La sortie du soustracteur 46 est reliée à une entrée notée d2 du multiplexeur 47. Le multiplexeur 47 possède en outre : une entrée notée c1 reliée à la première entrée des moyens de calcul 49 pour recevoir le vecteur $\vec{V_t}$ , une entrée notée c2 qui reçoit un vecteur vitesse nul ; quatre sorties notées a, b, c, d constituant respectivement une première, une deuxième, une troisième et une quatrième sortie des moyens de calcul 49 ; et une entrée de commande reliée à la sortie du comparateur 48.

Le soustracteur 45 calcule la valeur de la fonction DFD pour le pixel à interpoler, avec le vecteur $\vec{V_t}$ comme vecteur vitesse associé. La valeur de la fonction DFD est comparée à la valeur de seuil, 7, par le comparateur 48. Si la valeur de la fonction DFD est inférieure ou égale à 7, le multiplexeur 47 transmet les informations appliquées aux entrées a1, b1, c1, d1, respectivement vers les sorties a, b, c, d. Si la valeur de la fonction DFD correspondant au vecteur $\vec{V_t}$ est supérieure à la valeur de seuil, 7, le multiplexeur 47 est commandé pour transmettre les informations présentes sur les entrées a2, b2, c2, d2 respectivement vers les sorties a, b, c, d.

Ainsi la première et la seconde sortie des moyens de calcul 49 fournissent respectivement une valeur de luminance $L(\overrightarrow{PA},T_a)$, $L(\overrightarrow{PB},T_b)$, correspondant au vecteur vitesse retenu pour être associé au pixel à interpoler ; la seconde et la troisième sortie des moyens de calcul 49 fournissent respectivement le vecteur vitesse qui est retenu pour constituer le vecteur $\vec{V}(IX',IY',T_i)$ associé au pixel à interpoler, et la valeur de la fonction DFD correspondant à ce pixel à interpoler $(IX',IY',T_i)$.

La troisième et la quatrième sortie des moyens de calcul 49 sont reliées respectivement aux bornes d'entrée 26 et 29 des moyens de calcul 5a pour l'inscription du vecteur vitesse associé et de la valeur de la fonction DFD dans les mémoires M1 et M2 à l'adresse constituée par les coordonnées (IX',IY'). Ce vecteur vitesse et cette valeur de la fonction DFD seront ainsi disponibles ultérieurement pour calculer des vecteurs vitesse interpolés pour des pixels orphelins.

Les moyens de calcul 50 possèdent deux entrées reliées respectivement à la première et à la seconde sortie des moyens de calcul 49 pour recevoir les deux valeurs de luminance des points de base A et B correspondant au pixel à interpoler. Les moyens de calcul 50 comportent deux multiplicateurs 51 et 52 et un additionneur 53. Le multiplicateur 51 possède : une première entrée reliée à la première sortie des moyens 49 ; une seconde entrée recevant une valeur constante égale à

$$\frac{T_j-T_a}{T_b-T_a} ;$$

et une sortie reliée à une première entrée de l'additionneur 53. Le multiplicateur 52 possède : une première entrée reliée à la deuxième sortie des moyens 49 ; une seconde entrée recevant une valeur constante égale à

$$\frac{T_b-T_j}{T_b-T_a} ,$$

et une sortie reliée à une seconde entrée de l'additionneur 53. L'additionneur 53 possède une sortie reliée à la borne de sortie 51 du dispositif d'interpolation temporelle pour lui fournir une valeur de luminance interpolée $L(IX',IY',T_i)$ correspondant au pixel à interpoler, de coordonnées $(IX',IY',T_i)$, et calculée selon la formule (9). Ces valeurs de luminance peuvent être utilisées en temps réel, au fur et à mesure de leur calcul, ou bien être stockées dans une mémoire de la trame, non représentée.

L'invention ne se limite pas aux exemples de réalisation décrits ci-dessus, de nombreuses variantes sont à la portée de l'homme de l'art. Notamment il est à la portée de l'homme de l'art de modifier l'exemple de réalisation décrit précédemment pour mettre en oeuvre la deuxième et la troisième variante du procédé, décrites précédemment.

L'invention est applicable en temps réel notamment aux dispositifs de changement de standard pour des trames de télévision, et à la restitution de trames transmises à très bas débit avec suppression d'un certain nombre de trames.

## Revendications

**1.** Procédé d'interpolation temporelle d'images, pour déterminer une valeur de luminance interpolée pour chaque pixel d'une image $(T_j)$ dite image à interpoler, à partir des valeurs de luminance des pixels d'une première et d'une seconde image dites images connues $(T_a , T_b)$, prises à des instants $T_a$ et $T_b$ respectivement, $T_j$ étant compris entre $T_a$ et $T_b$ ; consistant à :

- associer les valeurs dis composantes d'un vecteur vitesse à chaque pixel (H) de l'image à interpoler $(T_j)$, dit pixel à interpoler ;
- déterminer dans les deux images connues $(T_a , T_b)$ les coordonnées de deux points (A, B) appelées points de base de l'interpolation temporelle, chacun de ces deux points correspondant au centre $(F_j)$ du pixel à interpoler (H), par une translation dans le plan de l'une des images connues $(T_a , T_b)$, translation dont le vecteur est fonction du produit obtenu par la multiplication du vecteur vitesse associé au pixel à interpoler (H) avec respectivement les durées $T_j$-$T_a$ et $T_b$-$T_j$;
- déterminer la valeur de luminance de chacun des deux points de base (A, B) par une interpolation spatiale entre des pixels voisins de chacun de ces points de base (A, B), respectivement dans les deux images connues $(T_a , T_b)$ ;
- déterminer une valeur de luminance pour le pixel à interpoler (H), en calculant une combinaison linéaire des deux valeurs de luminance des points de base (A, B), pondérées par les durées $T_j$-$T_a$ et $T_b$-$T_j$ respectivement ;

  caractérisé en ce que, pour associer les composantes d'un vecteur vitesse à chaque pixel à interpoler (H), il consiste à :
- estimer par un procédé classique les composantes d'un vecteur vitesse ($\vec{V}$)pour chaque pixel (G) d'une seule image $(T_i)$, dite porteuse du mouvement, correspondant à un instant $T_i$ compris entre $T_a$ et $T_b$ , ou étant $T_a$ ou $T_b$ ;
- déterminer, successivement pour chaque pixel (G) de l'image porteuse $(T_i)$, dit pixel père, les coordonnées du centre $(F_j)$ d'un pixel à interpoler (H), dit pixel fils, le pixel fils étant le pixel de l'image à interpoler contenant un point $(E_j)$ correspondant au centre $(C_j)$ du pixel père translaté par une translation dont le vecteur est fonction du produit obtenu par multiplication du vecteur vitesse ($\vec{V}$) du pixel père avec la durée $T_i$-$T_j$ ;
- associer, successivement à chaque pixel à interpoler (H), un vecteur vitesse constitué par le vecteur vitesse ($\vec{V}$) de son pixel père (G) ou de l'un de ses pixels pères, s'il existe au moins un

pixel père pour ce pixel à interpoler (H).

2. Procédé selon la revendication 1, caractérisé en ce que pour déterminer les coordonnées du centre ($F_j$) d'un pixel fils (H) correspondant à un pixel père donné (G), il consiste à :
   - déterminer les coordonnées d'un point ($E_j$) de l'image à interpoler ($T_j$) correspondant au centre ($C_i$) du pixel père (G), par une translation dont le vecteur est égal au vecteur vitesse du pixel père multiplié par la durée $T_i$-$T_j$ ;
   - puis à déterminer le pixel (H) de l'image à interpoler ($T_j$), dont le centre ($F_j$) est le plus proche du point ($E_j$) ainsi déterminé, ce pixel constituant alors le pixel fils du pixel père donné (G).

3. Procédé selon la revendication 1, appliqué à des images constituées par des trames d'images de télévision, caractérisé en ce que pour déterminer les coordonnées du centre ($F_j$) d'un pixel fils correspondant au centre ($C_j$) d'un pixel père donné, il consiste à :
   - déterminer les coordonnées d'un point ($E_j$) de la trame à interpoler ($T_j$) correspondant au centre ($C_i$) du pixel père (G), par une translation dont le vecteur est égal au vecteur vitesse du pixel père multiplié par la durée $T_i$-$T_j$, en décalant l'une des coordonnées du point ($E_j$) de l'image à interpoler correspondant au centre ($C_j$) du pixel père (G), d'une valeur égale à 0 ou -0,5 ou +0,5 pixel, en fonction de la parité de la trame constituant l'image à interpoler ($T_j$) et de la parité de la trame constituant l'image porteuse de mouvement ($T_i$) ;
   - puis à déterminer le pixel (H) de l'image à interpoler ($T_j$), dont le centre ($F_j$) est le plus proche du point ($E_j$) ainsi déterminé ce pixel constituant alors le pixel fils du pixel père donné (G) ;

     et en ce que pour déterminer dans les deux images connues ($T_a$ , $T_b$) les coordonnées des deux points de base (A, B), il consiste en outre à décaler l'une des coordonnées de ces deux Points (A, B) de 0 ou -0,5 ou +0,5 pixel, en fonction des parités des deux trames constituant les deux images connues ($T_a$ , $T_b$), et de la parité de la trame constituant l'image à interpoler ($T_j$).

4. Procédé selon l'une des revendications 1 à 3, caractérisé en ce que pour chaque pixel à interpoler (H) ayant au moins un pixel père, il consiste en outre à valider le vecteur vitesse du pixel père (G), en calculant la valeur, appellée DFD du pixel à interpoler, de la différence des luminances des deux points de base (A, B) de l'interpolation temporelle ; et en vérifiant que la DFD est inférieure à une valeur de seuil fixée ;

   et en ce que, si le vecteur vitesse d'aucun pixel père n'est validé, ou si le pixel à interpoler n'a aucun pixel père, il consiste en outre :
   - à associer au pixel à interpoler un vecteur vitesse interpolé en fonction des vecteurs vitesses associés aux pixels voisins du pixel à interpoler, si la DFD du pixel à interpoler, calculée pour le vecteur vitesse interpolé, est inférieure à une valeur de seuil fixée ;
   - sinon, à associer au pixel à interpoler un vecteur vitesse nul.

5. Procédé selon la revendication 4, caractérisé en ce que, lorsqu'un pixel à interpoler (H) a plusieurs pixels pères (G), le vecteur vitesse associé à ce pixel à interpoler est constitué par le vecteur vitesse du pixel père tel que la DFD du pixel à interpoler soit minimale.

6. Procédé selon la revendication 1, caractérisé en ce que, lorsqu'un pixel à interpoler (H) a plusieurs pixels pères (G), le vecteur vitesse associé à ce pixel à interpoler est constitué par le vecteur vitesse du pixel père ayant été déterminé en dernier.

7. Procédé selon la revendication 1, caractérisé en ce qu'il consiste en outre, pour chaque pixel à interpoler (H) n'ayant pas de pixel père, à lui associer un vecteur vitesse interpolé en fonction des vecteurs vitesses associés aux pixels voisins du pixel à interpoler, s'il y a des pixels voisins ayant un vecteur vitesse associé ; sinon, à lui associer un vecteur vitesse nul.

8. Procédé selon la revendication 1, caractérisé en ce qu'il consiste en outre, pour chaque pixel à interpoler (H) n'ayant pas de pixel père (G) à lui associer un vecteur vitesse nul.

9. Dispositif d'interpolation temporelle d'images, pour la mise en oeuvre du procédé selon la revendication 1, recevant une suite de valeurs de luminance représentant respectivement les pixels d'une première image connue ($T_a$) prise à un instant $T_a$ et les pixels d'une seconde image connue ($T_b$) prise à un instant $T_b$ ; recevant une suite de valeurs représentant respectivement les composantes du vecteur

vitesse des pixels d'une troisième image ($T_i$), dite image porteuse du mouvement, correspondant à un instant $T_i$ compris entre $T_a$ et $T_b$ ou pouvant être $T_a$ ou $T_b$ ; et fournissant une suite de valeurs de luminance interpolées représentant la luminance des pixels d'une image à interpoler ($T_j$) correspondant à un instant $T_j$ compris entre $T_a$ et $T_b$ ; caractérisé en ce qu'il comporte :

- une première et une seconde mémoire (MA, MB) pour stocker respectivement les valeurs de luminance de la première et de la seconde image connue ($T_a$ , $T_b$) ;
- des premiers moyens de calcul (7) pour calculer, pour chaque pixel de l'image porteuse ($T_i$), dit pixel père (G), les coordonnées du centre ($F_j$) d'un pixel, dit pixel fils (H) situé dans l'image à interpoler ($T_j$) et dont le centre ($F_j$) correspond au centre ($C_j$) du pixel père translaté par une translation dont le vecteur est fonction du produit obtenu par multiplication du vecteur vitesse ($\vec{V}$) du pixel père avec la durée $T_i$ - $T_j$ ;
- des deuxièmes moyens de calcul (5a, 5b) pour associer à chaque pixel (H) de l'image à interpoler ($T_j$), dit pixel à interpoler, un vecteur vitesse qui est le vecteur vitesse de son pixel père (G) ou de l'un de ses pixels pères, s'il en exite au moin un ;
- des troisièmes moyens (49) pour calculer les coordonnées, dans les deux images connues ($T_a$ , $T_b$) respectivement, de deux points (A, B) appelés points de base de l'interpolation temporelle, chacun de ces deux points (A, B) correspondant au centre du pixel à interpoler (H), par une translation dont le vecteur est fonction du produit obtenu par la multiplication du vecteur vitesse associé au pixel à interpoler, respectivement par les durées $T_j$-$T_a$ et $T_b$-$T_j$ ;
- et des quatrièmes moyens (50) pour calculer les valeurs de luminance des deux points de base (A, B) et en déduire une valeur de luminance pour le pixel à interpoler (H), en calculant une combinaison linéaire de deux valeurs de luminance des deux points de base, pondérées par les durées $T_j$-$T_a$ et $T_b$-$T_j$ respectivement.

**10.** Dispositif selon la revendication 9, pour la mise en oeuvre du procédé selon la revendication 2 caractérisé en ce que les premiers moyens de calcul (7) comportent :

- un multiplicateur (71) pour calculer un vecteur en multipliant le vecteur vitesse du pixel père (G), par la durée $T_i$-$T_j$ ;
- un soustracteur (72) pour soustraire, au vecteur calculé par le multiplicateur (71), un vecteur ayant pour composantes les coordonnées (IX,IY) du centre ($C_j$) du pixel père (G) ;
- un dispositif (74) pour calculer la valeur entière la plus proche de chacune des composantes du vecteur calculé par le soustracteur (72) ; chacune constituant une coordonnée du centre ($F_j$) du pixel fils (H).

**11.** Dispositif selon la revendication 10, pour la mise en oeuvre du procédé selon la revendication 3, caractérisé en ce qu'il comporte en outre un dispositif (73) de correction de parité de trames, pour additionner un vecteur de correction au vecteur calculé par le soustracteur (72), intercalé entre le soustracteur (72) et le dispositif (74) pour calculer la valeur entière la plus proche de chaque composante ; le dispositif de correction (73) étant commandé en fonction de la parité des trames correspondant aux instants $T_i$ et $T_j$.

**12.** Dispositif selon la revendication 9, pour la mise en oeuvre du procédé selon la revendication 4, caractérisé en ce que les deuxièmes moyens de calcul (5a, 5b) comportent :

- deux premiers dispositifs de calcul (6, 8) pour calculer les coordonnées, dans les deux images connues ($T_a$ , $T_b$) respectivement, de deux points (A, B) appelés points de base de l'interpolation temporelle, à partir des coordonnées du pixel à interpoler (H), par une translation fonction du vecteur vitesse d'un pixel père (G) du pixel à interpoler, s'il existe au moins un pixel père, et en fonction des durées $T_j$-$T_a$ et $T_b$-$T_j$ respectivement ;
- deux deuxièmes dispositifs de calcul (10, 11) pour calculer les valeurs de luminance des deux points de base (A, B) par une interpolation spatiale respectivement dans les deux images connues ($T_a$ , $T_b$) ;
- un soustracteur (14) pour calculer la valeur absolue, appelée DFD du pixel à interpoler de la différence, des deux valeurs de luminance calculées par les deuxièmes dispositifs de calcul (10, 11) ;
- un premier comparateur (16) pour comparer la valeur de DFD à une valeur de seuil prédéterminée et valider le vecteur vitesse du pixel père considéré si la valeur de DFD est inférieure à la valeur de seuil ;

- une première mémoire (M1) pour stocker un vecteur vitesse associé, pour chaque pixel à interpoler ;
- des moyens de calcul (5b) pour associer à un pixel à interpoler, un vecteur vitesse interpolé à partir de vecteurs vitesses associés à des pixels voisins, et lus dans la première mémoire (M1), lorsque le pixel à interpoler n'a aucun pixel père dont le vecteur vitesse est validé.

**13.** Dispositif selon la revendication 12, pour la mise en oeuvre du procédé selon la revendication 5, caractérisé en ce que les deuxièmes moyens de calcul (5a, 5b) comportent en outre :
- une seconde mémoire (M2) pour stocker une valeur de DFD pour chaque pixel à interpoler ;
- un second comparateur (15) pour comparer chaque valeur de DFD calculée pour un pixel à interpoler, avec une valeur de DFD stockée précédemment pour le même pixel à interpoler ;
- des moyens (4, 18) pour incrire dans la première mémoire (M1) le vecteur vitesse d'un pixel père (G) d'un pixel à interpoler (H) si la valeur de DFD calculée pour ce vecteur vitesse est inférieure à celle stockée dans la seconde mémoire (M2) à l'adresse correspondant à ce pixel à interpoler (H) ;
- des moyens (4, 17) pour inscrire dans la seconde mémoire (M2) la valeur de DFD calculée pour ce vecteur vitesse à l'adresse correspondant au pixel à interpoler (H).

**Claims**

**1.** Method of time interpolation of images, for determining an interpolated luminance value for each pixel of an image ($T_j$) called image to be interpolated, on the basis of the luminance values of the pixels of a first and of a second image called known images ($T_a$, $T_b$), taken at instants $T_a$ and $T_b$ respectively, $T_j$ lying between $T_a$ and $T_b$; consisting in:
- associating the values of the components of a speed vector with each pixel (H) of the image to be interpolated ($T_j$), called pixel to be interpolated;
- determining, in the two known images ($T_a$, $T_b$), the coordinates of two points (A, B) called base points of the time interpolation, each of these two point corresponding to the centre ($F_j$) of the pixel to be interpolated (H), by a translation in the plane of one of the known images ($T_a$, $T_b$), a translation whose vector is a function of the product obtained by the multiplication of the speed vector associated with the pixel to be interpolated (H) with respectively the durations $T_j$-$T_a$ and $T_b$-$T_j$;
- determining the luminance value of each of the two base points (A, B) by a spatial interpolation between pixels adjacent to each of these base points (A, B), respectively in the two known images ($T_a$, $T_b$);
- determining a luminance value for the pixel to be interpolated (H), by calculating a linear combination of the two luminance values of the base point (A, B), weighted by the durations $T_j$-$T_a$ and $T_b$-$T_j$ respectively;

  characterised in that, in order to associate the components of a speed vector with each pixel to be interpolated (H), it consists in:
- estimating, by a conventional method, the components of a speed vector ($\vec{V}$) for each pixel (G) of a single image ($T_i$), called carrier of the movement, corresponding to an instant $T_i$ lying between $T_a$ and $T_b$, or being $T_a$ or $T_b$;
- determining, successfully for each pixel (G) of the carrier image ($T_i$), called father pixel, the coordinates of the centre ($F_j$) of a pixel to be interpolated (H), called son pixel, the son pixel being the pixel of the image to be interpolated containing a point ($E_j$) corresponding to the centre ($C_j$) of the father pixel translated by a translation whose vector is a function of the product obtained by multiplication of the speed vector ($\vec{V}$) of the father pixel with the duration $T_i$-$T_j$;
- associating successively with each pixel to be interpolated (H), a speed vector constituted by the speed vector ($\vec{V}$) of its father pixel (G) or one of its father pixels, if there exists at least one father pixel for this pixel to be interpolated (H).

**2.** Method according to Claim 1, characterised in that in order to determine the coordinates of the centre ($F_j$) of a son pixel (H) corresponding to a given father pixel (G), it consists in:
- determining the coordinates of a point ($E_j$) of the image to be interpolated ($T_j$) corresponding to the centre ($C_i$) of the father pixel (G), by a translation whose vector is equal to the speed vector of the father pixel multiplied by the duration $T_i$-$T_j$;

- then in determining the pixel (H) of the image to be interpolated ($T_j$), whose centre ($F_j$) is the closest to the point ($E_j$) thus determined, this pixel then constituting the son pixel of the given father pixel (G).

**3.** Method according to Claim 1, applied to images constituted by television image frames, characterised in that in order to determine the coordinates of the centre ($F_j$) of a son pixel corresponding to the centre ($C_j$) of a given father pixel, it consists in:
- determining the coordinates of a point ($E_j$) of the frame to be interpolated ($T_j$) corresponding to the centre ($C_i$) of the father pixel (G), by a translation whose vector is equal to the speed vector of the father pixel multiplied by the duration $T_i$-$T_j$, by shifting one of the coordinates of the point ($E_j$) of the image to be interpolated corresponding to the centre ($C_j$) of the father pixel (G), by a value equal to 0 or -0.5 or +0.5 pixel, as a function of the parity of the frame constituting the image to be interpolated ($T_j$) and of the parity of the frame constituting the movement carrier image ($T_i$);
- then in determining the pixel (H) of the image to be interpolated ($T_j$), whose centre ($F_j$) is the closest to the point ($E_j$) thus determined, this pixel then constituting the son pixel of the given father pixel (G);

  and in that in order to determine in the two known images ($T_a$, $T_b$) the coordinates of the two base points (A, B), it further consists in shifting one of the coordinates of these two points (A, B) by 0 or -0.5 or +0.5 pixel, as a function of the parities of the two frames constituting the two known images ($T_a$, $T_b$), and of the parity of the frame constituting the image to be interpolated ($T_j$).

**4.** Method according to one of Claims 1 to 3, characterised in that for each pixel to be interpolated (H) having at least one father pixel, it further consists in validating the speed vector of the father pixel (G), by calculating the value, called DFD of the pixel to be interpolated, of the difference in the luminances of the two base points (A, B) of the time interpolation; and by verifying that the DFD is lower than a fixed threshold value;

and in that, if there is no father pixel whose speed vector is validated, or if the pixel to be interpolated has no father pixel, it further consists:
- in associating with the pixel to be interpolated a speed vector interpolated as a function of the speed vectors associated with the pixels adjacent to the pixel to be interpolated, if the DFD of the pixel to be interpolated, calculated for the interpolated speed vector, is lower than a fixed threshold value;
- otherwise, in associating with the pixel to be interpolated a zero speed vector.

**5.** Method according to Claim 4, characterised in that, when a pixel to be interpolated (H) has several father pixels (G), the speed vector associated with this pixel to be interpolated is constituted by the speed vector of the father pixel such that the DFD of the pixel to be interpolated is minimal.

**6.** Method according to Claim 1, characterised in that, when a pixel to be interpolated (H) has several father pixels (G), the speed vector associated with this pixel to be interpolated is constituted by the speed vector of the father pixel having been determined last.

**7.** Method according to Claim 1, characterised in that it further consists, for each pixel to be interpolated (H) not having a father pixel, in associating with it a speed vector interpolated as a function of the speed vectors associated with the pixels adjacent to the pixel to be interpolated, if there are adjacent pixels having an associated speed vector; otherwise, in associating with it a zero speed vector.

**8.** Method according to Claim 1, characterised in that it further consists, for each pixel to be interpolated (H) not having a father pixel (G), in associating with it a zero speed vector.

**9.** Device for time interpolation of images, for implementing the method according to Claim 1, receiving a series of luminance values representing respectively the pixels of a first known image ($T_a$) taken at an instant $T_a$ and the pixels of a second known image ($T_b$) taken at an instant ($T_b$); receiving a series of values representing respectively the components of the speed vector of the pixels of a third image ($T_i$), called carrier image of the movement, corresponding to an instant $T_i$ lying between $T_a$ and $T_b$ or possibly being $T_a$ or $T_b$; and supplying a series of interpolated luminance values representing the luminance of the pixels of an image to be interpolated ($T_j$) corresponding to an instant $T_j$ lying between

$T_a$ and $T_b$; characterized in that it includes:

- a first and a second memory (MA, MB) for storing respectively the luminance values of the first and of the second known image ($T_a$, $T_b$);
- first calculating means (7) for calculating, for each pixel of the carrier image ($T_i$), called father pixel (G), the coordinates of the centre ($F_j$) of a pixel, called son pixel (H), situated in the image to be interpolated ($T_j$) and whose centre ($F_i$) corresponds to the centre ($C_j$) of the father pixel translated by a translation whose vector is a function of the product obtained by multiplication of the speed vector ($\vec{V}$) of the father pixel with the duration $T_i$-$T_j$;
- second calculating means (5a, 5b) for associating with each pixel (H) of the image to be interpolated ($T_j$), called pixel to be interpolated, a speed vector which is the speed vector of its father pixel (G) or of one of its father pixels, if at least one of them exists;
- third means (49) for calculating the coordinates, in the two known images ($T_a$, $T_b$) respectively, of two points (A, B) called base points of the time interpolation, each of these two points (A, B) corresponding to the centre of the pixel to be interpolated (H), by a translation whose vector is a function of the product obtained by the multiplication of the speed vector associated with the pixel to be interpolated, respectively by the durations $T_j$-$T_a$ and $T_b$-$T_j$;
- and fourth means (50) for calculating the luminance values of the two base points (A, B) and deducing therefrom a luminance value for the pixel to be interpolated (H), by calculating a linear combination of two luminance values of the two base points, weighted by the durations $T_j$-$T_a$ and $T_b$-$T_j$ respectively.

**10.** Device according to Claim 9, for implementing the method according to Claim 2, characterised in that the first calculating means (7) include:

- a multiplier (71) for calculating a vector by multiplying the speed vector of the father pixel (G) by the duration $T_i$-$T_j$;
- a subtracter (72) for subtracting from the vector calculated by the multiplier (71), a vector having as its components the coordinates (IX, IY) of the centre ($C_j$) of the father pixel (G);
- a device (74) for calculating the closest integer value of each of the components of the vector calculated by the subtracter (72); each constituting one coordinate of the centre ($F_j$) of the son pixel (H).

**11.** Device according to Claim 10, for implementing the method according to Claim 3, characterised in that it further includes a frame parity correction device (73), for adding a correction vector to the vector calculated by the subtracter (72), interposed between the subtracter (72) and the device (74) for calculating the closest integer value of each component; the correction device (73) being controlled as a function of the parity of the frames corresponding to the instants $T_i$ and $T_j$.

**12.** Device according to Claim 9, for implementing the method according to Claim 4, characterised in that the second calculating means (5a, 5b) include:

- two first calculating devices (6, 8) for calculating the coordinates, in the two known images ($T_a$,$T_b$) respectively, of two points (A, B) called base points of the time interpolation, on the basis of the coordinates of the pixel to be interpolated (H) by a translation function of the speed vector of a father pixel (G) of the pixel to be interpolated, if at least one father pixel exists, and as a function of the durations $T_j$-$T_a$ and $T_b$-$T_j$ respectively;
- two second calculating devices (10, 11) for calculating the luminance values of the two base points (A, B) by a spatial interpolation respectively in the two known images ($T_a$, $T_b$);
- a subtracter (14) for calculating the absolute value, called DFD, of the pixel to be interpolated from the difference in the two luminance values calculated by the second calculating devices (10, 11);
- a first comparator (16) for comparing the value of DFD with a predetermined threshold value, and validating the speed vector of the father pixel in question if the value of DFD if less than the threshold value;
- a first memory (M1) for storing an associated speed vector, for each pixel to be interpolated;
- calculating means (5b) for associating with a pixel to be interpolated, a speed vector interpolated on the basis of speed vectors associated with adjacent pixels, and read in the first memory (M1), when the pixel to be interpolated has no father pixel whose speed vector is validated.

13. Device according to Claim 12, for implementing the method according to Claim 5, characterised in that the second calculating means (5a, 5b) further include:
    - a second memory (M2) for storing a value of DFD for each pixel to be interpolated;
    - a second comparator (15) for comparing each calculated value of DFD for a pixel to be interpolated, with a previously stored value of DFD for the same pixel to be interpolated;
    - means (4, 18) for writing into the first memory (M1) the speed vector of a father pixel (G) of a pixel to be interpolated (H), if the calculated value of DFD for this speed vector is less than that stored in the second memory (M2) at the address corresponding to this pixel to be interpolated (H);
    - means (4, 17) for writing in the second memory (M2) the calculated value of DFD for this speed vector, at the address corresponding to the pixel to be interpolated (H).

**Patentansprüche**

1. Verfahren zur zeitlichen Interpolation von Bildern, um einen interpolierten Helligkeitswert für jedes Pixel eines zu interpolierenden Bildes ($T_j$) ausgehend von Helligkeitswerten der Pixel eines ersten bekannten Bildes ($T_a$) und eines zweiten bekannten Bildes ($T_b$) zu bestimmen, die den Bildzeitpunkten $T_a$ und $T_b$ entsprechen, wobei der Zeitpunkt $T_j$ zwischen $T_a$ und $T_b$ liegt und wobei das Verfahren darin besteht,
    - die Werte der Komponenten eines Geschwindigkeitsvektors jedem Pixel (H) des zu interpolierenden Bilds ($T_j$) zuzuordnen,
    - in den beiden bekannten Bildern ($T_a$, $T_b$) die Koordinaten von zwei Punkten (A, B) zu bestimmen, die Basispunkte der zeitlichen Interpolation genannt werden, wobei jeder dieser beiden Punkte dem Zentrum ($F_j$) des zu interpolierenden Pixels (H) nach einer Verschiebung in der Ebene eines der bekannten Bilder ($T_a$, $T_b$) entspricht und der Vektor dieser Verschiebung vom Produkt zwischen dem dem zu interpolierenden Pixel (H) zugeordneten Geschwindigkeitsvektor und der Zeitdauer $T_j$ - $T_a$ bzw. $T_b$ - $T_j$ abhängt,
    - den Helligkeitswert jedes der beiden Basispunkte (A, B) durch eine räumliche Interpolation zwischen jedem dieser Basispunkte (A, B) benachbarten Pixeln in den beiden bekannten Bildern ($T_a$ bzw. $T_b$) zu bestimmen,
    - einen Helligkeitswert für das zu interpolierende Pixel (H) zu bestimmen, indem eine lineare Kombination der beiden Helligkeitswerte der Basispunkte (A, B), die mit der Zeitdauer $T_j$ - $T_a$ bzw. $T_b$ - $T_j$ gewichtet sind, berechnet wird,
    - dadurch gekennzeichnet, daß das Verfahren im Hinblick auf die Zuordnung der Komponenten eines Geschwindigkeitsvektors zu jedem zu interpolierenden Pixel (H) darin besteht,
    - durch ein klassisches Verfahren die Komponenten eines Geschwindigkeitsvektors ($\vec{V}$) für jedes Pixel (G) eines einzigen Bilds ($T_i$) abzuschätzen, das die Bewegung definiert, entsprechend einem Zeitpunkt $T_i$ der zwischen $T_a$ und $T_b$ liegt oder mit einem dieser Zeitpunkte zusammenfällt,
    - nacheinander für jedes Pixel (G) des die Bewegung definierenden Bilds ($T_i$), Vater-Pixel genannt, die Koordinaten des Zentrums ($F_j$) eines zu interpolierenden Pixels (H) Sohn-Pixel genannt, zu bestimmen, wobei das Sohn-Pixel das Pixel des zu interpolierenden Bilds ist, das einen Punkt ($E_j$) entsprechend dem Zentrum ($C_j$) des Vater-Pixels nach einer Verschiebung ist, die durch einen Vektor bestimmt ist, der vom Produkt aus dem Geschwindigkeitsvektor ($\vec{V}$) des Vater-Pixels mit der Zeitdauer $T_i$ - $T_j$ abhängt,
    - nacheinander jedem zu interpolierenden Pixel (H) einen Geschwindigkeitsvektor zuzuordnen, der aus dem Geschwindigkeitsvektor ($\vec{V}$) seines Vater-Pixels (G) oder eines seiner Vater-Pixel besteht, sofern mindestens ein Vater-Pixel für dieses zu interpolierende Pixel (H) besteht.

2. Verfahren nach Anspruch 1, dadurch gekennzeichnet, daß zu Bestimmung der Koordinaten des Zentrums ($F_j$) eines Sohn-Pixels (H) entsprechend einem gegebenen Vater-Pixel (G) das Verfahren darin besteht,
    - die Koordinaten eines Punkts ($E_j$) des zu interpolierenden Bilds ($T_j$) zu bestimmen, die dem Zentrum ($C_i$) des Vater-Pixels (G) nach einer Verschiebung entsprechen, deren Vektor gleich dem Geschwindigkeitsvektor des Vater-Pixels multipliziert mit der Zeitdauer $T_i$ - $T_j$ ist,
    - dann das Pixel (H) des zu interpolierenden Bilds ($T_j$) zu bestimmen, dessen Zentrum ($F_j$) dem so bestimmten Punkt ($E_j$) am nächsten kommt, sodaß dieses Pixel dann das Sohn-Pixel zu dem gegebenen Vater-Pixel (G) bildet.

**3.** Verfahren nach Anspruch 1 in Anwendung auf Bilder, die aus Fernsehhalbbildern bestehen, dadurch gekennzeichnet, daß zur Bestimmung der Koordinaten des Zentrums ($F_j$) eines Sohn-Pixels entsprechend dem Zentrum ($C_j$) eines gegebenen Vater-Pixels das Verfahren darin besteht,

- die Koordinaten eines Punkts ($E_j$) des zu interpolierenden Halbbilds ($T_j$) entsprechend dem Zentrum ($C_i$) des Vater-Pixels (G) nach einer Verschiebung zu bestimmen, deren Vektor gleich dem Geschwindigkeitsvektor des Vater-Pixels multipliziert mit der Zeitdauer $T_i$ - $T_j$ ist, indem eine der Koordinaten des Punkts ($E_j$) des zu interpolierenden Bilds entsprechend dem Zentrum ($C_j$) des Vater-Pixels (G) um einen Wert gleich 0 oder - 0,5 oder +0,5 Pixel verschoben wird, je nach der Parität des das zu interpolierende Bild ($T_j$) darstellenden Halbbilds und der Parität des Halbbilds, das das die Bewegung definierende Bild ($T_i$) darstellt,
- dann das Pixel (H) des zu interpolierenden Bilds ($T_j$) zu bestimmen, dessen Zentrum ($F_j$) dem so bestimmten Punkt ($E_j$) am nächsten kommt, sodaß dieses Pixel dann das Sohn-Pixel des gegebenen Vater-Pixels (G) darstellt,

und daß zur Bestimmung der Koordinaten der beiden Basispunkte (A, B) in den beiden bekannten Bildern ($T_a$, $T_b$) das Verfahren außerdem darin besteht, eine der Koordinaten dieser beiden Punkte (A, B) um 0 oder - 0,5 oder + 0,5 Pixel, je nach den Paritäten der die beiden bekannten Bilder ($T_a$, $T_b$) darstellenden Halbbilder und der Parität des das zu interpolierende Bild ($T_j$) darstellenden Halbbilds zu verschieben.

**4.** Verfahren nach einem der Ansprüche 1 bis 3 dadurch gekennzeichnet, daß für jedes zu interpolierende pixel (H), das mindestens ein Vater-Pixel hat, das Verfahren außerdem darin besteht, den Geschwindigkeitsvektor des Vater-Pixels (G) zu bestätigen, indem der sogenannte DFD-Wert des zu interpolierenden Pixels berechnet wird, der die Differenz der Helligkeiten der beiden Basispunkte (A, B) der zeitlichen Interpolation darstellt, und indem überprüft wird, ob der DFD-Wert unter einem festen Schwellwert liegt,

und daß für den Fall, daß der Geschwindigkeitsvektor keines einzigen Vater-Pixels bestätigt wurde, oder daß das zu interpolierende Pixel kein Vater-Pixel hat, das Verfahren weiter darin besteht,

- dem zu interpolierenden Pixel einen Geschwindigkeitsvektor zuzuordnen, der abhängig von den Geschwindigkeitsvektoren interpoliert wurde, die zu Nachbar-Pixeln des zu interpolierenden Pixel gehören, wenn der DFD-Wert des zu interpolierenden Pixels, der für den interpolierten Geschwindigkeitsvektor berechnet wurde, unter einem festen Schwellwert liegt,
- und ansonsten dem zu interpolierenden Pixel einem Geschwindigkeitsvektor 0 zuzuordnen.

**5.** Verfahren nach Anspruch 4, dadurch gekennzeichnet, daß für den Fall, daß ein zu interpolierendes Pixel (H) mehrere Vater-Pixel (G) besitzt, der diesen zu interpolierenden Pixel zugeordnete Geschwindigkeitsvektor aus dem Geschwindigkeitsvektor des Vater-Pixels gebildet wird, für den der DFD-Wert des zu interpolierenden Pixels am kleinsten ist.

**6.** Verfahren nach Anspruch 1, dadurch gekennzeichnet, daß für den Fall, daß ein zu interpolierendes Pixel (H) mehrere Vater-Pixel (G) hat, der diesen zu interpolierenden Pixel zugeordnete Geschwindigkeitsvektor aus dem Geschwindigkeitsvektor des Vater-Pixels gebildet wird, der zuletzt bestimmt worden war.

**7.** Verfahren nach Anspruch 1, dadurch gekennzeichnet, daß es außerdem darin besteht, für jedes zu interpolierende Pixel (H), das kein Vater-Pixel hat, einem Geschwindigkeitsvektor zuzuordnen, der abhängig von den den Nachbar-Pixeln des zu interpolierenden Pixels zugeordneten Geschwindigkeitsvektoren interpoliert wurde, sofern es Nachbar-Pixel gibt, die einen zugehörigen Geschwindigkeitsvektor besitzen, während ansonsten dem zu interpolierenden Pixel ein Geschwindigkeitsvektor 0 zugeordnet wird.

**8.** Verfahren nach Anspruch 1, dadurch gekennzeichnet, daß es außerdem darin besteht, jedem zu interpolierenden Pixel (H), das kein Vater-Pixel (G) hat, einen Geschwindigkeitsvektor 0 zuzuordnen.

**9.** Vorrichtung zur zeitlichen Bildinterpolation und zur Durchführung des Verfahrens gemäß Anspruch 1, die eine Folge von Helligkeitswerten zugeführt bekommt, die die Pixel eines ersten bekannten Bilds ($T_a$), das zu einem Zeitpunkt $T_a$ aufgenommen wurde, und die Pixel eines zweiten bekannten Bilds ($T_b$) darstellen, das zu einem Zeitpunkt $T_b$ aufgenommen wurde, wobei die Vorrichtung weiter eine Folge von Werten zugeführt erhält, die die Komponenten des Geschwindigkeitsvektors der Pixel eines dritten

Bilds ($T_i$) darstellen, das die Bewegung definierendes Bild genannt wird und einem Zeitpunkt $T_i$ entspricht, der zwischen $T_a$ und $T_b$ liegt oder mit einem dieser Zeitpunkte zusammenfällt, und wobei die Vorrichtung eine Folge von interpolierten Helligkeitswerten liefert, die die Helligkeit der Pixel eines zu interpolierenden Bilds ($T_j$) entsprechend einem zwischen $T_a$ und $T_b$ liegenden Zeitpunkt $T_j$ darstellen, dadurch gekennzeichnet, daß die Vorrichtung enthält:

- einen ersten Speicher (MA) und einen zweiten Speicher (MB), um die Helligkeitswerte des ersten bekannten Bilds ($T_a$) bzw. des zweiten bekannten Bilds ($T_b$) zu speichern,
- erste Rechenmittel (7), um für jedes Pixel des die Bewegung definierenden Bilds ($T_i$), Vater-Pixel (G) genannt, die Koordinaten des Zentrums ($F_j$) eines Pixels zu berechnen, das Sohn-Pixel (H) genannt wird, sich in dem zu interpolierenden Bild ($T_j$) befindet und dessen Zentrum ($F_j$) dem Zentrum ($C_j$) des Vater-Pixels nach einer Verschiebung entspricht, deren Vektor vom Produkt aus dem Geschwindigkeitsvektor (V) des Vater-Pixels und der Dauer $T_i$ - $T_j$ abhängt,
- zweite Rechenmittel (5a, 5b), um jedem Pixel (H) des zu interpolierenden Bilds ($T_j$) einen Geschwindigkeitsvektor zuzuordnen, der der Geschwindigkeitsvektor seines Vater-Pixels (G) oder eines seiner Vater-Pixel ist, sofern mindestens eines existiert,
- dritte Mittel (49) zur Berechnung der Koordinaten von zwei Basispunkten (A, B) der zeitlichen Interpolation in den beiden bekannten Bildern ($T_a$, $T_b$) zu berechnen, wobei jeder dieser beiden Punkte (A, B) dem Zentrum des zu interpolierenden Pixels (H) nach einer Verschiebung entspricht, deren Vektor vom Produkt aus dem dem zu interpolierenden Pixel zugeordneten Geschwindigkeitsvektor mit der Zeitdauer $T_j$ - $T_a$ bzw. $T_b$ - $T_j$ entspricht,
- und vierte Rechenmittel (50) zur Berechnung der Helligkeitswerte der beiden Basispunkte (A, B) und zur Ableitung eines Helligkeitswerts für das zu interpolierende Pixel (H), indem eine lineare Kombination von zwei Helligkeitswerten der beiden Basispunkte berechnet wird, die durch die Zeitdauer $T_j$ - $T_a$ bzw. $T_b$ - $T_j$ gewichtet sind.

**10.** Vorrichtung nach Anspruch 9 zur Durchführung des Verfahrens nach Anspruch 2, dadurch gekennzeichnet, daß die ersten Rechenmittel (7) aufweisen:

- einen Multiplizierer (71) zur Berechnung eines Vektors, indem der Geschwindigkeitsvektor des Vater-Pixels (G) mit der Zeitdauer $T_i$ - $T_j$ multipliziert wird,
- ein Subtrahierglied (72), um von dem im Multiplizierer (71) berechneten Vektor einen Vektor abzuziehen, dessen Komponenten die Koordinaten (IX, IY) des Zentrums ($C_j$) des Vater-Pixels (G) sind,
- eine Vorrichtung (74) zur Berechnung des nächstliegenden ganzzahligen Werts jeder der Komponenten des im Subtrahierglied (72) berechneten Vektors, wobei jede dieser Komponenten eine Koordinate des Zentrums ($F_j$) des Sohn-Pixels (H) bildet.

**11.** Vorrichtung nach Anspruch 10 zur Durchführung des Verfahrens nach Anspruch 3, dadurch gekennzeichnet, daß es außerdem eine Vorrichtung (73) zur Halbbildparitätskorrektur aufweist, um einen Korrekturvektor zum durch das Subtrahierglied (72) berechneten Vektor zu addieren, wobei diese Korrekturvorrichtung zwischen das Subtrahierglied (72) und die Vorrichtung (74) zur Berechnung des nächstliegenden ganzzahligen Werts jeder Komponente eingefügt ist und wobei die Korrekturvorrichtung (73) abhängig von der Parität der Halbbilder entsprechend den Zeitpunkten $T_i$ und $T_j$ gesteuert wird.

**12.** Vorrichtung nach Anspruch 9 zur Durchführung des Verfahrens nach Anspruch 4, dadurch gekennzeichnet, daß die zweiten Rechenmittel (5a, 5b) aufweisen:

- zwei erste Rechenvorrichtungen (6, 8) zur Berechnung der Koordinaten von zwei Basispunkten (A, B) der zeitlichen Interpolation in den beiden bekannten Bildern ($T_a$ bzw. $T_b$) ausgehend von den Koordinaten des zu interpolierenden Pixels (H) nach einer Verschiebung, die vom Geschwindigkeitsvektor eines Vater-Pixels (G) zum zu interpolierenden Pixel, falls mindestens ein Vater-Pixel existiert, sowie von der Zeitdauer $T_j$ - $T_a$ bzw. $T_b$ - $T_j$ abhängt,
- zwei zweite Rechenvorrichtungen (10, 11), um die Helligkeitswerte der beiden Basispunkte (A, B) über eine räumliche Interpolation in den beiden bekannten Bildern ($T_a$ bzw. $T_b$) zu berechnen,
- ein Subtrahierglied (14), um den Absolutwert, DFD genannt, der Differenz der beiden durch die zweiten Rechenvorrichtungen (10, 11) berechneten Helligkeitswerte für das zu interpolierende Pixel zu berechnen,
- einen ersten Komparator (16), um den Wert von DFD mit einem vorgegebenen Schwellwert zu vergleichen und den Geschwindigkeitsvektor des betrachteten Vater-Pixels zu bestätigen, wenn

der Wert von DFD unter dem Schwellwert liegt,
- einen ersten Speicher (M1), um für jedes zu interpolierende Pixel einen zugeordneten Geschwindigkeitsvektor zu speichern,
- Rechenmittel (5b), um einem zu interpolierenden Pixel einen interpolierten Geschwindigkeitsvektor ausgehend von benachbarten Pixeln zugeordneten Geschwindigkeitsvektoren zuzuweisen, wobei letztere Geschwindigkeitsvektoren aus dem ersten Speicher (M1) ausgelesen werden, wenn das zu interpolierende Pixel kein Vater-Pixel mit einem bestätigten Geschwindigkeitsvektor besitzt.

**13.** Vorrichtung nach Anspruch 12 zur Durchführung des Verfahrens nach Anspruch 5 dadurch gekennzeichnet, daß die zweiten Rechenmittel (5a, 5b) außerdem enthalten:
- einen zweiten Speicher (M2) zum Speichern des Werts von DFD für jedes zu interpolierende Pixel,
- einen zweiten Komparator (15), um jeden Wert von DFD, der für ein zu interpolierendes Pixel berechnet wurde, mit einem vorher für dasselbe zu interpolierende Pixel gespeicherten Wert von DFD zu vergleichen,
- Mittel (4, 18), um in den ersten Speicher (M1) den Geschwindigkeitsvektor eines Vater-Pixels (G) für ein zu interpolierendes Pixel (H) einzuschreiben, wenn der Wert von DFD, der für diesen Geschwindigkeitsvektor berechnet wurde, unter dem im zweiten Speicher (M2) an der diesem zu interpolierenden Pixel (H) entsprechenden Adresse gespeicherten Wert liegt,
- Mittel (4, 17), um in den zweiten Speicher (M2) den Wert von DFD, der für diesen Geschwindigkeitsvektor berechnet wurde, an der dem zu interpolierenden Pixel (H) entsprechenden Adresse einzuschreiben.

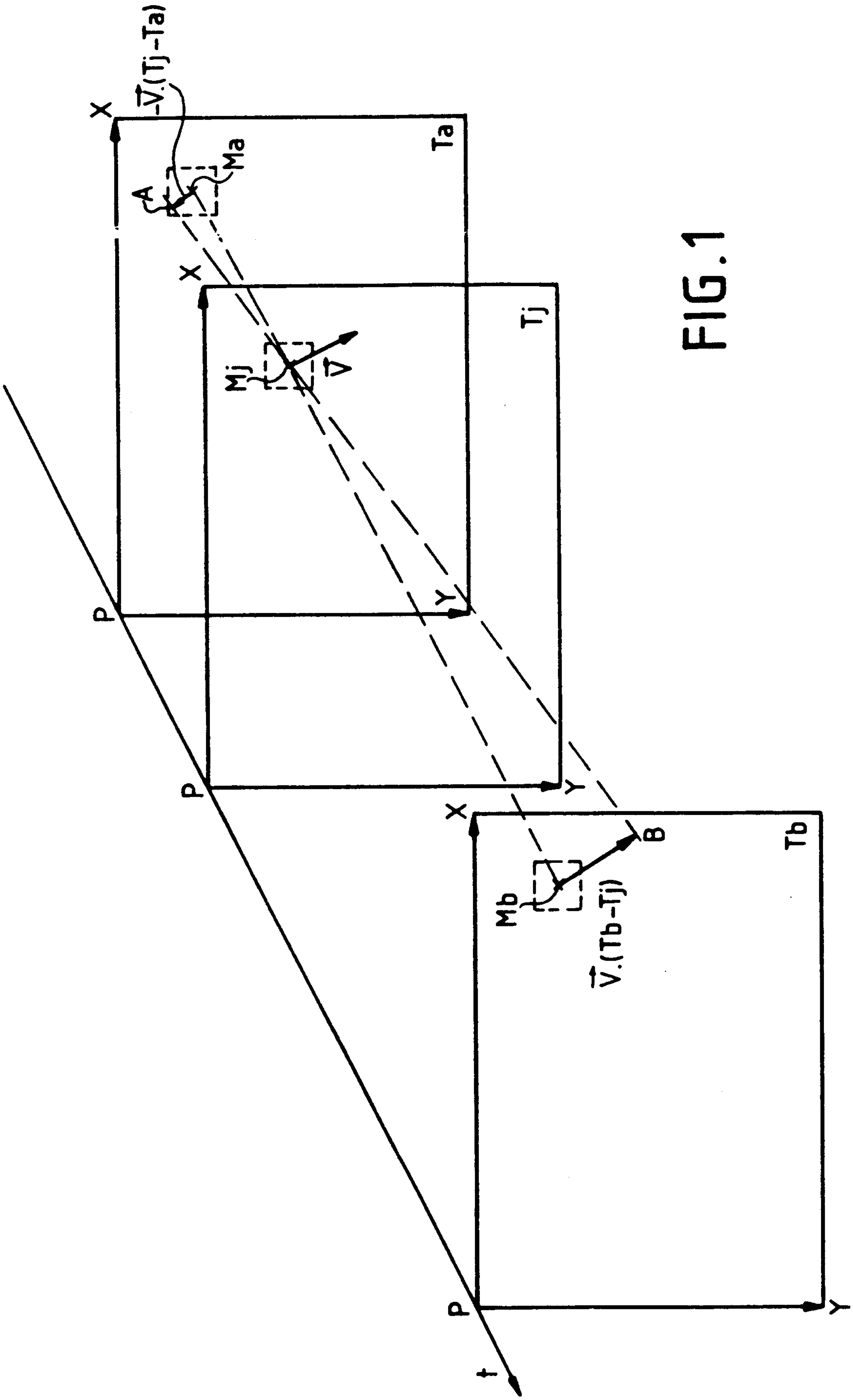


FIG.1

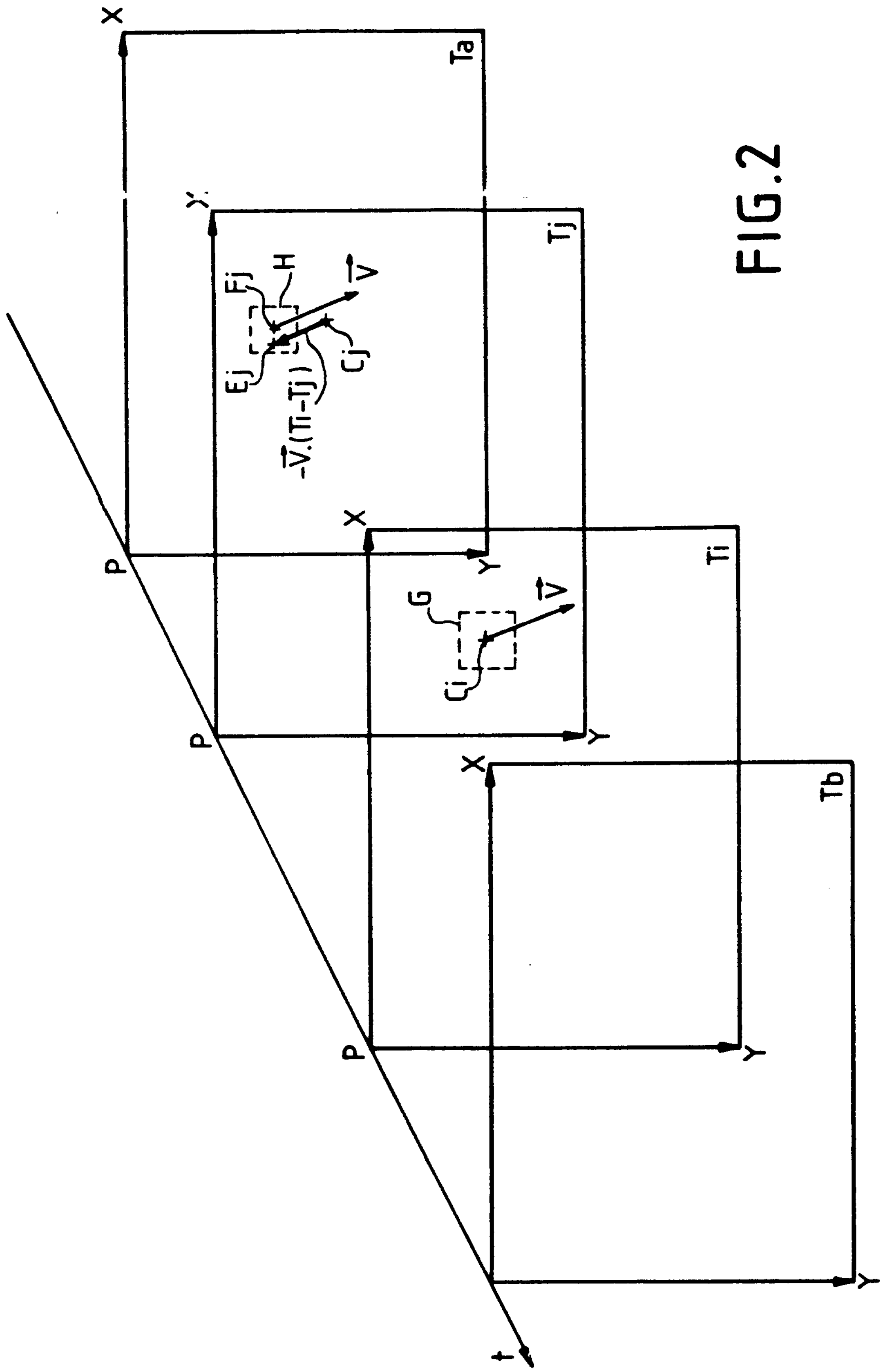


FIG.2

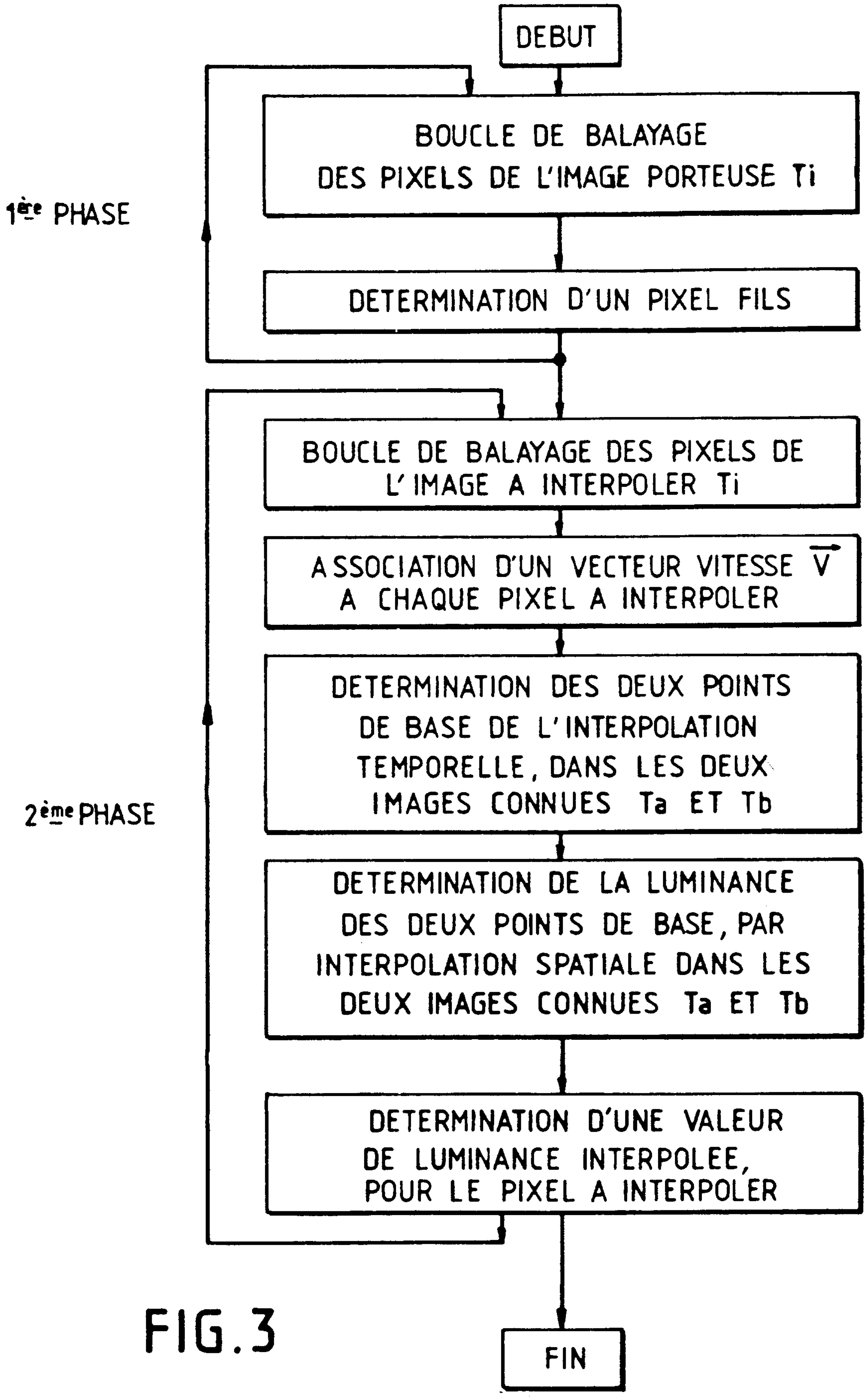
DEBUT
BOUCLE DE BALAYAGE DES PIXELS DE L'IMAGE PORTEUSE Ti
1ère PHASE
DETERMINATION D'UN PIXEL FILS
BOUCLE DE BALAYAGE DES PIXELS DE L'IMAGE A INTERPOLER Ti
ASSOCIATION D'UN VECTEUR VITESSE $\vec{V}$ A CHAQUE PIXEL A INTERPOLER
DETERMINATION DES DEUX POINTS DE BASE DE L'INTERPOLATION TEMPORELLE, DANS LES DEUX IMAGES CONNUES Ta ET Tb
2ème PHASE
DETERMINATION DE LA LUMINANCE DES DEUX POINTS DE BASE, PAR INTERPOLATION SPATIALE DANS LES DEUX IMAGES CONNUES Ta ET Tb
DETERMINATION D'UNE VALEUR DE LUMINANCE INTERPOLEE, POUR LE PIXEL A INTERPOLER
FIN

FIG.3

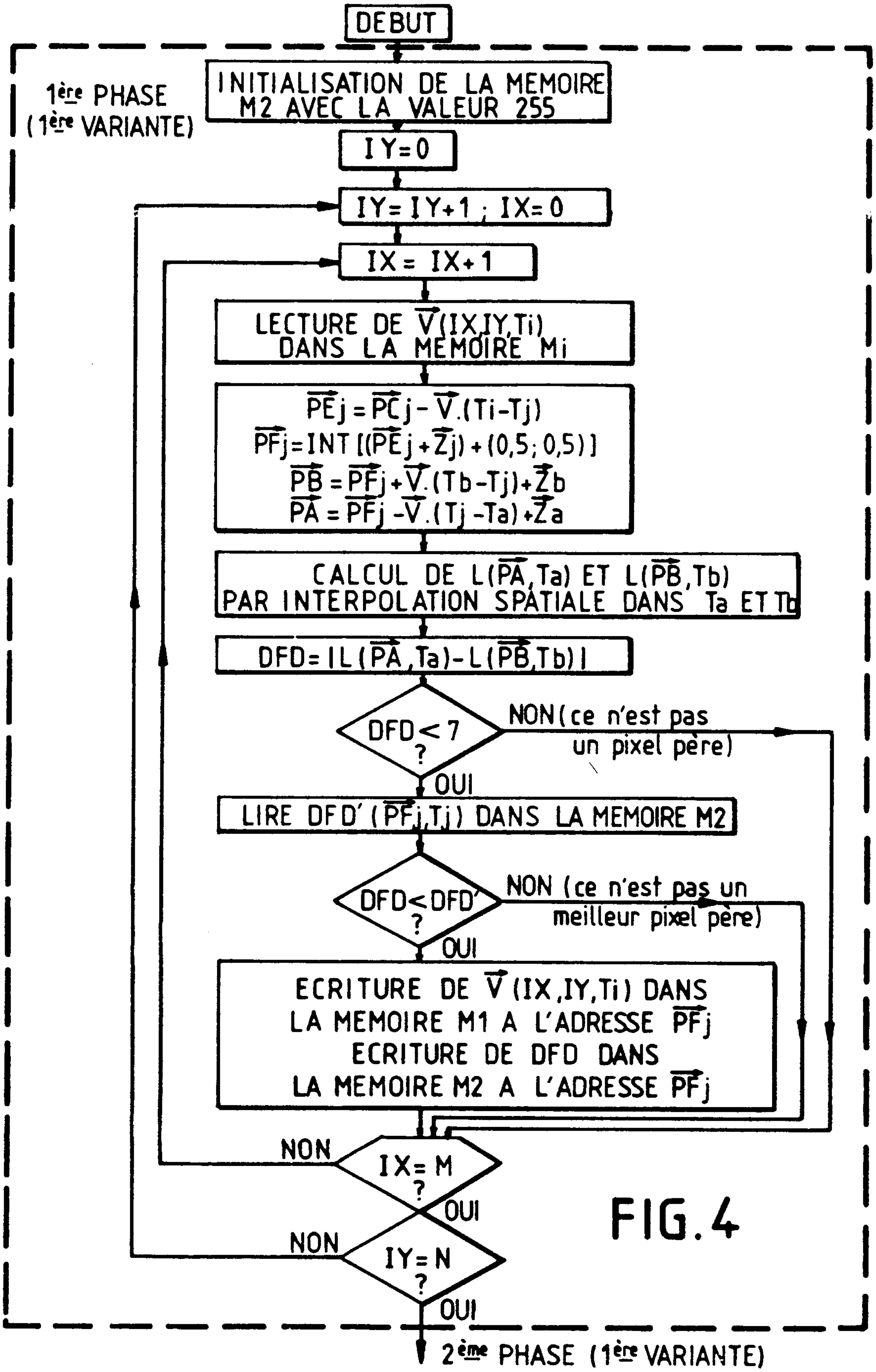
DEBUT
1ère PHASE (1ère VARIANTE)
INITIALISATION DE LA MEMOIRE M2 AVEC LA VALEUR 255
IY=0
IY=IY+1 ; IX=0
IX=IX+1
LECTURE DE V(IX,IY,Ti) DANS LA MEMOIRE Mi
PEj = PCj - V.(Ti-Tj)
PFj=INT [(PEj + Zj) + (0,5; 0,5)]
PB = PFj + V.(Tb-Tj) + Zb
PA = PFj - V.(Tj-Ta) + Za
CALCUL DE L(PA,Ta) ET L(PB,Tb) PAR INTERPOLATION SPATIALE DANS Ta ET Tb
DFD= |L(PA,Ta)-L(PB,Tb)|
DFD < 7 ?
NON (ce n'est pas un pixel père)
OUI
LIRE DFD'(PFj,Tj) DANS LA MEMOIRE M2
DFD ≤ DFD' ?
NON (ce n'est pas un meilleur pixel père)
OUI
ECRITURE DE V(IX,IY,Ti) DANS LA MEMOIRE M1 A L'ADRESSE PFj
ECRITURE DE DFD DANS LA MEMOIRE M2 A L'ADRESSE PFj
NON
IX= M ?
OUI
NON
IY= N ?
OUI
2ème PHASE (1ère VARIANTE)

FIG.4

FIG.5

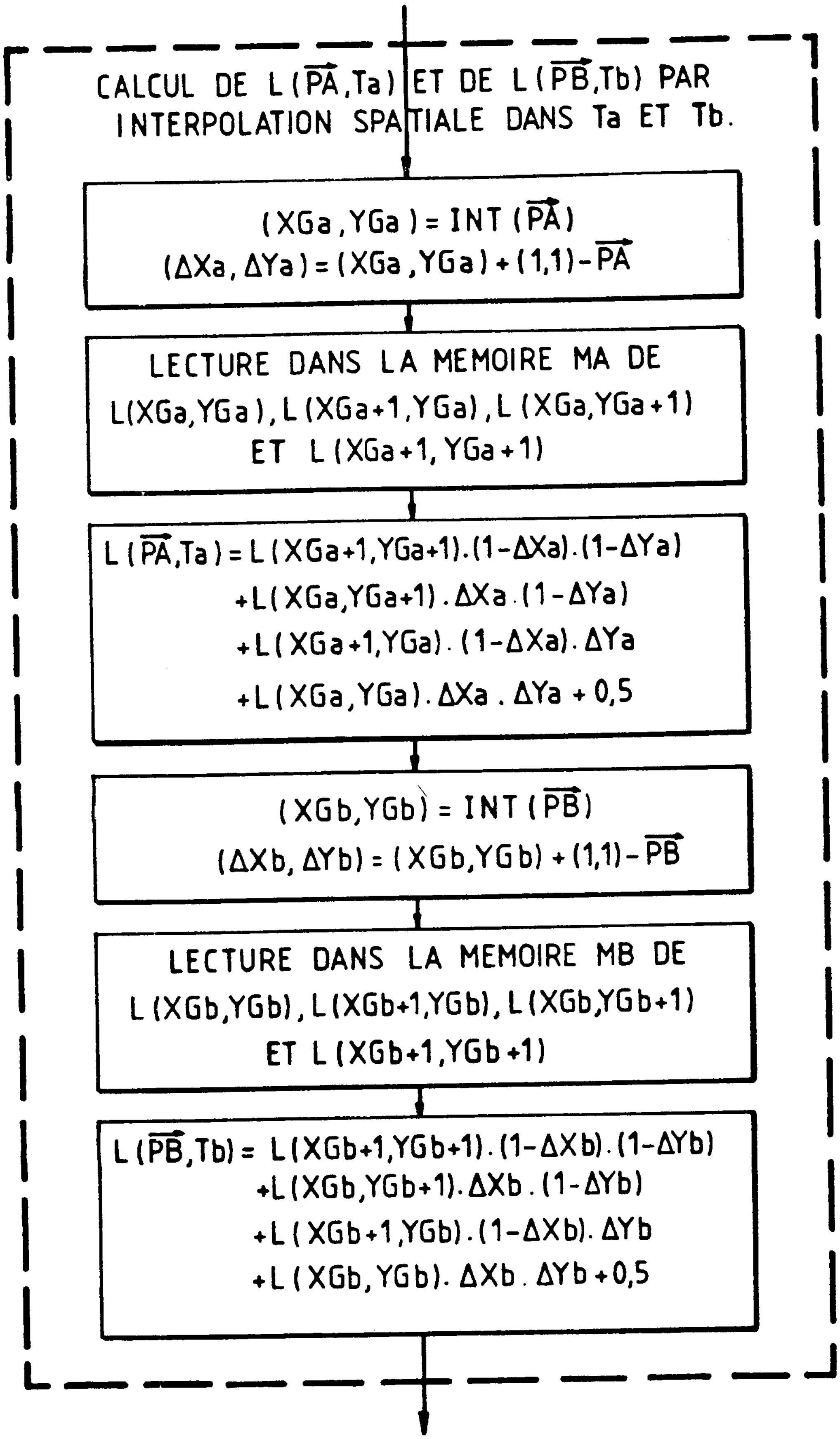
CALCUL DE L(PA,Ta) ET DE L(PB,Tb) PAR INTERPOLATION SPATIALE DANS Ta ET Tb.
(XGa,YGa) = INT(PA)
(ΔXa, ΔYa) = (XGa,YGa) + (1,1) - PA
LECTURE DANS LA MEMOIRE MA DE L(XGa,YGa), L(XGa+1,YGa), L(XGa,YGa+1) ET L(XGa+1,YGa+1)
L(PA,Ta) = L(XGa+1,YGa+1).(1-ΔXa).(1-ΔYa) +L(XGa,YGa+1).ΔXa.(1-ΔYa) +L(XGa+1,YGa).(1-ΔXa).ΔYa +L(XGa,YGa).ΔXa.ΔYa + 0,5
(XGb,YGb) = INT(PB)
(ΔXb, ΔYb) = (XGb,YGb) + (1,1) - PB
LECTURE DANS LA MEMOIRE MB DE L(XGb,YGb), L(XGb+1,YGb), L(XGb,YGb+1) ET L(XGb+1,YGb+1)
L(PB,Tb) = L(XGb+1,YGb+1).(1-ΔXb).(1-ΔYb) +L(XGb,YGb+1).ΔXb.(1-ΔYb) +L(XGb+1,YGb).(1-ΔXb).ΔYb +L(XGb,YGb).ΔXb.ΔYb +0,5

FIG.6

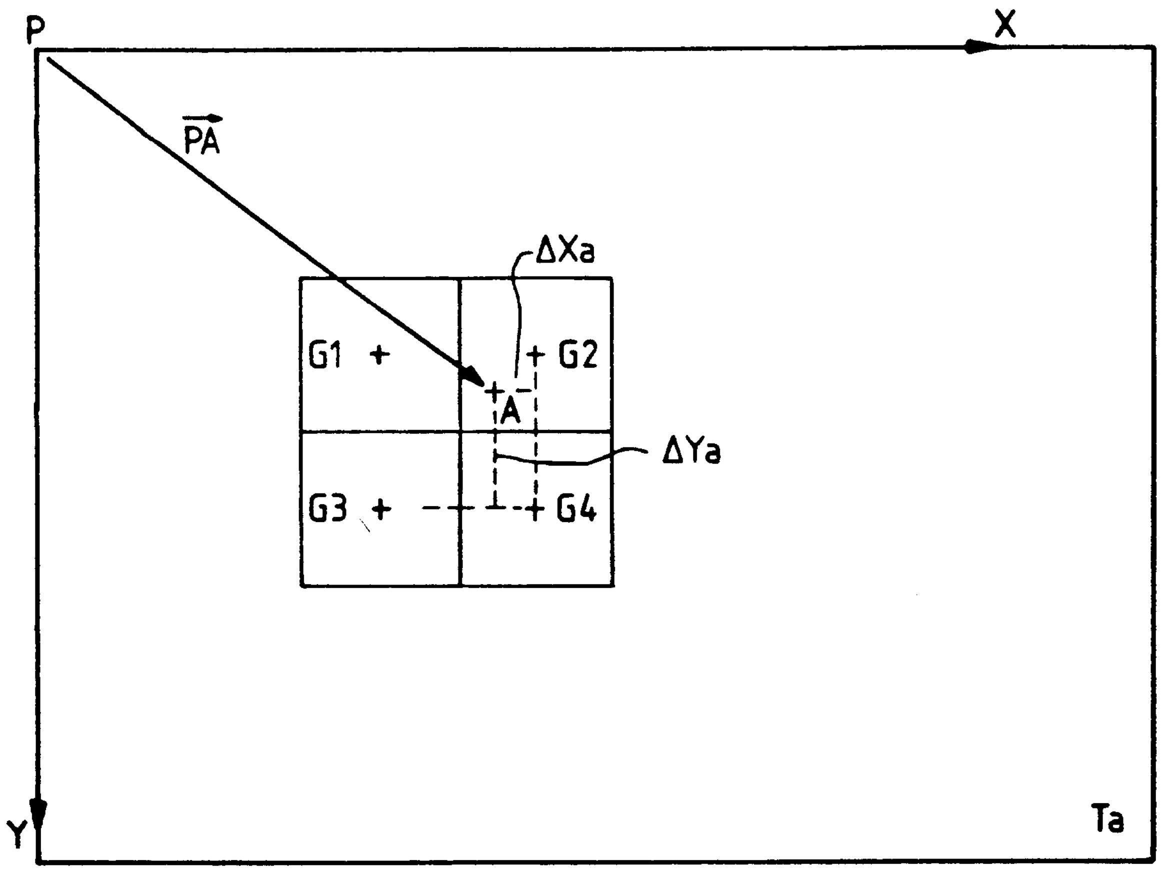

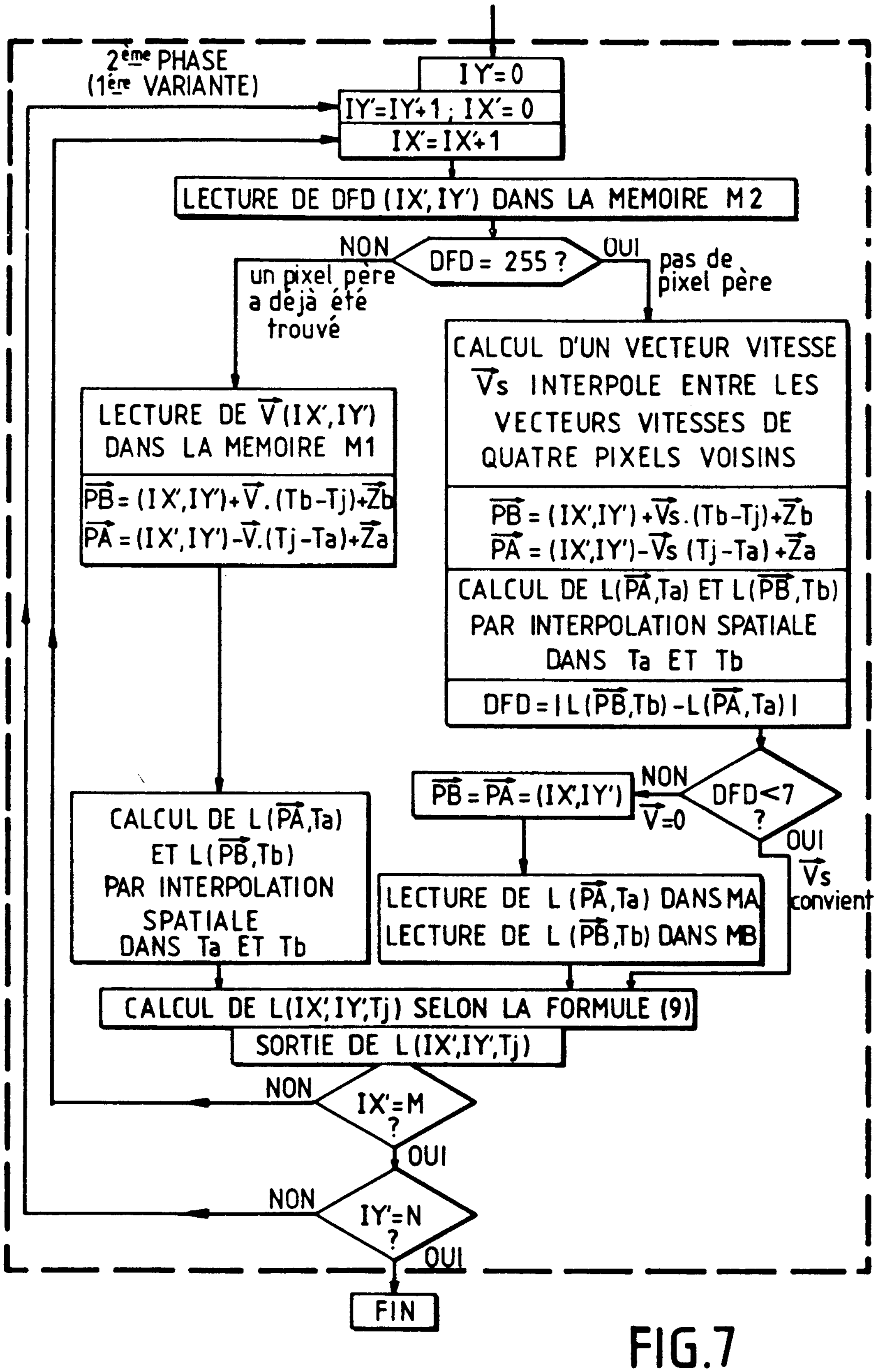
2ème PHASE
(1ère VARIANTE)
IY'=0
IY'=IY'+1 ; IX'=0
IX'=IX'+1
LECTURE DE DFD (IX',IY') DANS LA MEMOIRE M2
DFD = 255 ?
NON
un pixel père a déjà été trouvé
OUI
pas de pixel père
LECTURE DE V(IX',IY') DANS LA MEMOIRE M1
PB = (IX',IY')+V.(Tb-Tj)+Zb
PA = (IX',IY')-V.(Tj-Ta)+Za
CALCUL D'UN VECTEUR VITESSE Vs INTERPOLE ENTRE LES VECTEURS VITESSES DE QUATRE PIXELS VOISINS
PB = (IX',IY')+Vs.(Tb-Tj)+Zb
PA = (IX',IY')-Vs (Tj-Ta)+Za
CALCUL DE L(PA,Ta) ET L(PB,Tb) PAR INTERPOLATION SPATIALE DANS Ta ET Tb
DFD = | L(PB,Tb) - L(PA,Ta) |
DFD<7 ?
NON
PB = PA = (IX',IY')
V=0
OUI
Vs convient
CALCUL DE L(PA,Ta) ET L(PB,Tb) PAR INTERPOLATION SPATIALE DANS Ta ET Tb
LECTURE DE L (PA,Ta) DANS MA
LECTURE DE L (PB,Tb) DANS MB
CALCUL DE L(IX',IY',Tj) SELON LA FORMULE (9)
SORTIE DE L(IX',IY',Tj)
IX'=M ?
NON
OUI
IY'=N ?
NON
OUI
FIN

FIG.7

FIG.8

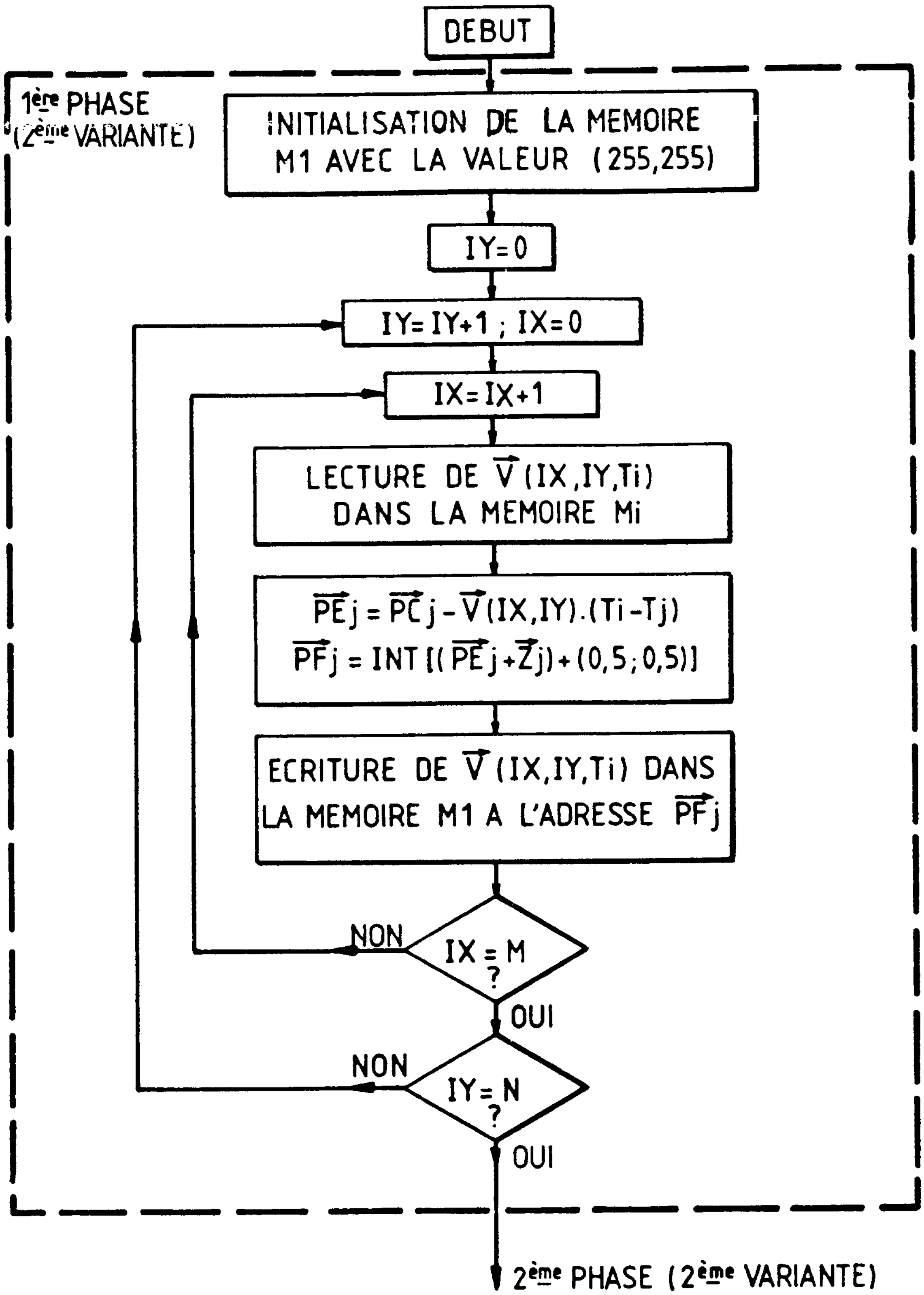
DEBUT
1ère PHASE (2ème VARIANTE)
INITIALISATION DE LA MEMOIRE M1 AVEC LA VALEUR (255,255)
IY=0
IY=IY+1 ; IX=0
IX=IX+1
LECTURE DE V(IX,IY,Ti) DANS LA MEMOIRE Mi
PEj = PCj - V(IX,IY).(Ti-Tj)
PFj = INT [(PEj+Zj)+(0,5;0,5)]
ECRITURE DE V(IX,IY,Ti) DANS LA MEMOIRE M1 A L'ADRESSE PFj
NON
IX = M ?
OUI
NON
IY = N ?
OUI
2ème PHASE (2ème VARIANTE)

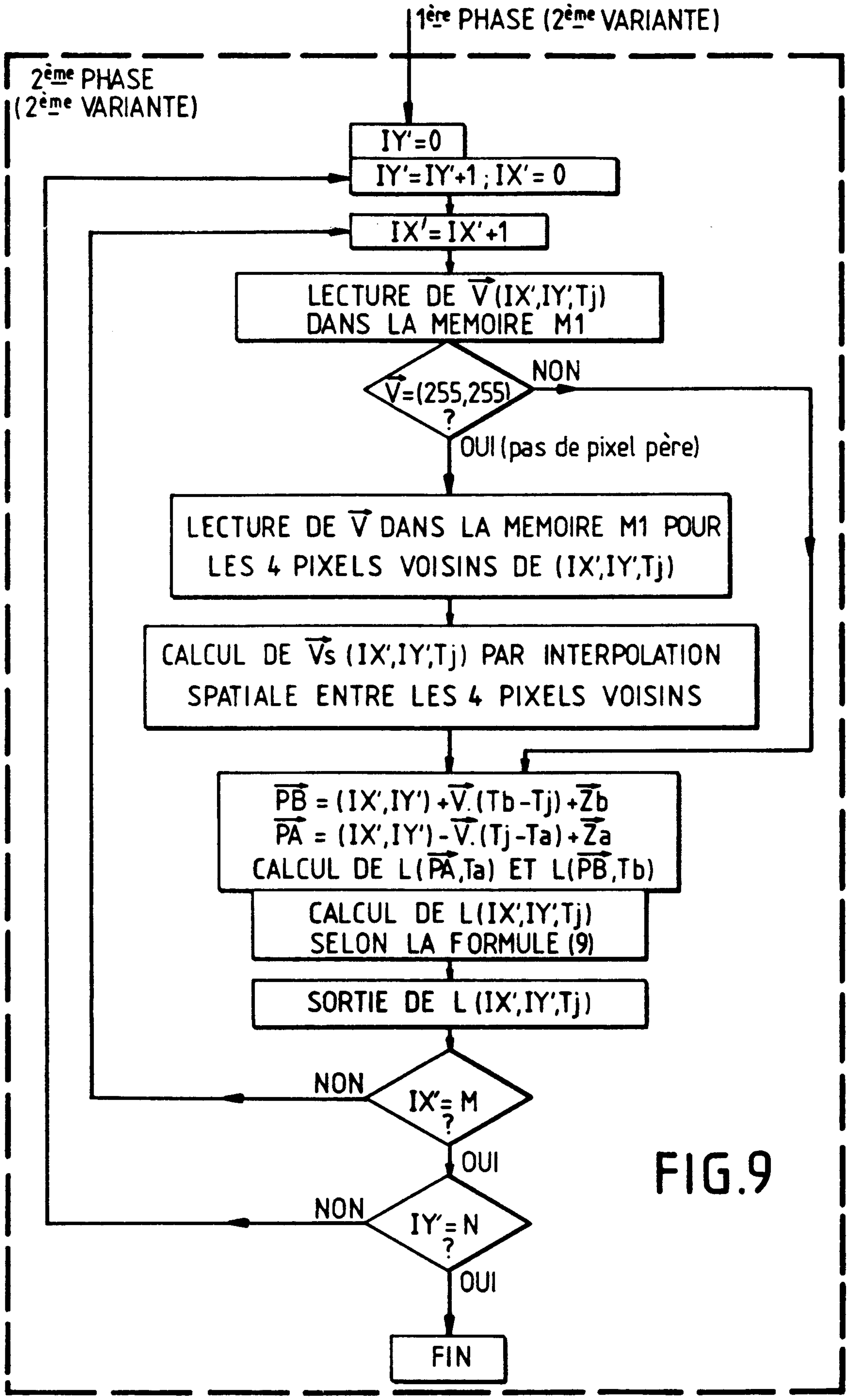

1ère PHASE (2ème VARIANTE)
2ème PHASE
(2ème VARIANTE)
IY'=0
IY'=IY'+1 ; IX'= 0
IX'=IX'+1
LECTURE DE V(IX',IY',Tj)
DANS LA MEMOIRE M1
V=(255,255)
?
NON
OUI (pas de pixel père)
LECTURE DE V DANS LA MEMOIRE M1 POUR
LES 4 PIXELS VOISINS DE (IX',IY',Tj)
CALCUL DE Vs (IX',IY',Tj) PAR INTERPOLATION
SPATIALE ENTRE LES 4 PIXELS VOISINS
PB = (IX',IY') + V.(Tb-Tj) + Zb
PA = (IX',IY') - V.(Tj-Ta) + Za
CALCUL DE L(PA,Ta) ET L(PB,Tb)
CALCUL DE L(IX',IY',Tj)
SELON LA FORMULE (9)
SORTIE DE L (IX',IY',Tj)
NON
IX'= M
?
OUI
NON
IY'= N
?
OUI
FIN


FIG.9

FIG. 10

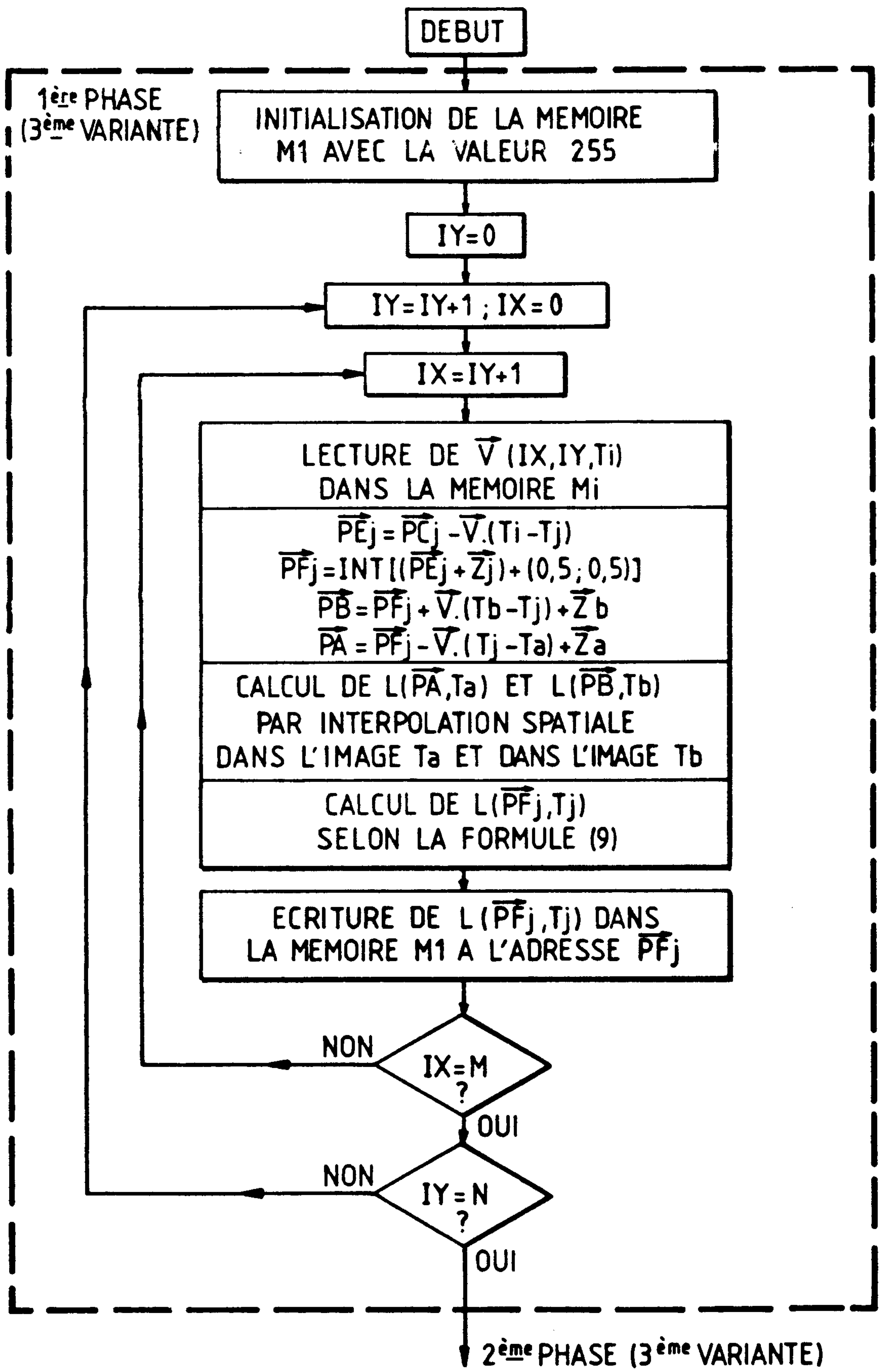
DEBUT
1ère PHASE (3ème VARIANTE)
INITIALISATION DE LA MEMOIRE M1 AVEC LA VALEUR 255
IY=0
IY=IY+1 ; IX=0
IX=IY+1
LECTURE DE V(IX,IY,Ti) DANS LA MEMOIRE Mi
PEj = PCj - V.(Ti - Tj)
PFj = INT[(PEj + Zj) + (0,5 ; 0,5)]
PB = PFj + V.(Tb - Tj) + Zb
PA = PFj - V.(Tj - Ta) + Za
CALCUL DE L(PA,Ta) ET L(PB,Tb) PAR INTERPOLATION SPATIALE DANS L'IMAGE Ta ET DANS L'IMAGE Tb
CALCUL DE L(PFj,Tj) SELON LA FORMULE (9)
ECRITURE DE L(PFj,Tj) DANS LA MEMOIRE M1 A L'ADRESSE PFj
NON
IX=M ?
OUI
NON
IY=N ?
OUI
2ème PHASE (3ème VARIANTE)

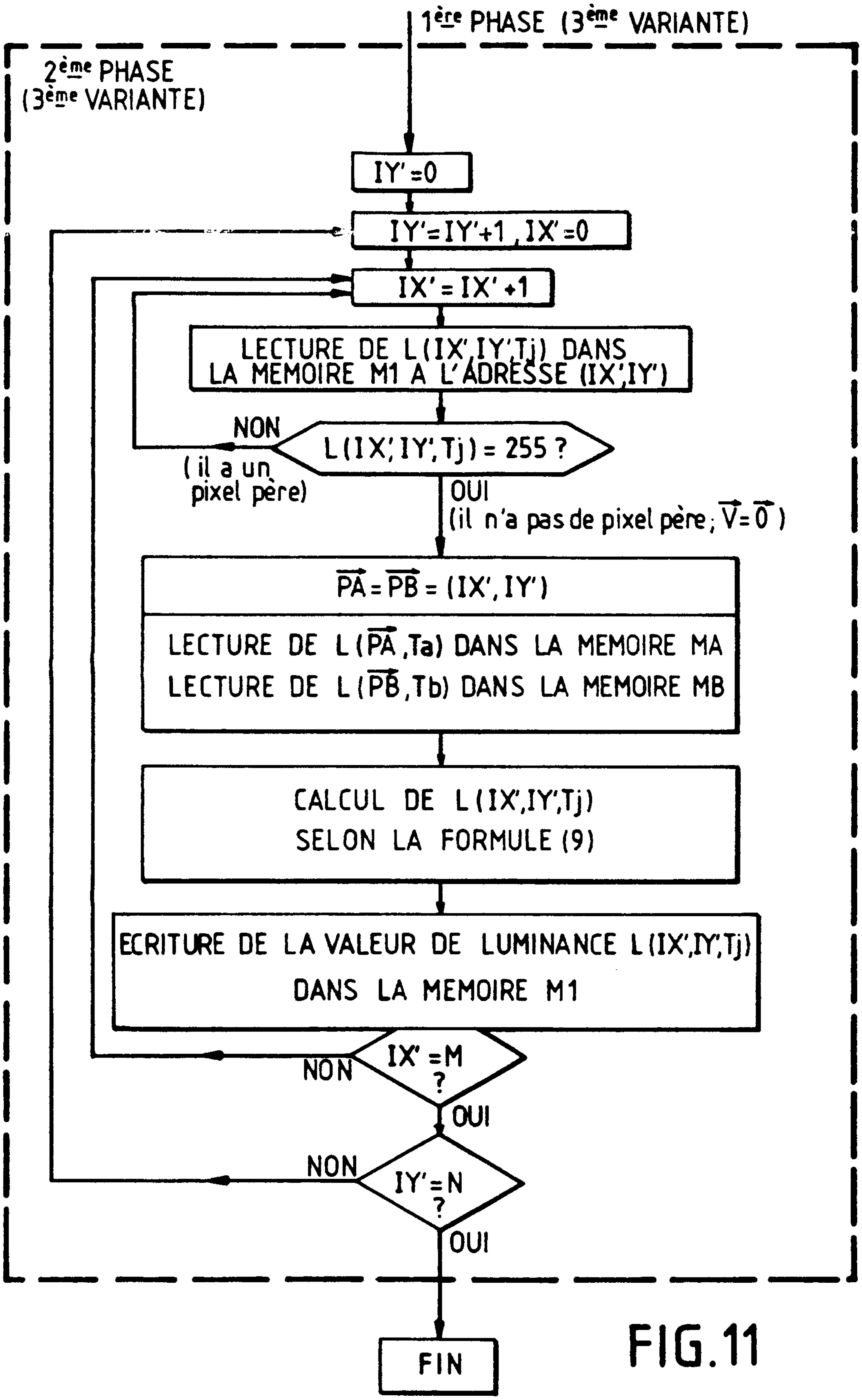
1ère PHASE (3ème VARIANTE)
2ème PHASE
(3ème VARIANTE)
IY'=0
IY'=IY'+1 , IX'=0
IX'=IX'+1
LECTURE DE L(IX',IY',Tj) DANS
LA MEMOIRE M1 A L'ADRESSE (IX',IY')
NON
L(IX',IY',Tj) = 255 ?
(il a un
pixel père)
OUI
(il n'a pas de pixel père ; V=0)
PA = PB = (IX', IY')
LECTURE DE L(PA,Ta) DANS LA MEMOIRE MA
LECTURE DE L(PB,Tb) DANS LA MEMOIRE MB
CALCUL DE L(IX',IY',Tj)
SELON LA FORMULE (9)
ECRITURE DE LA VALEUR DE LUMINANCE L(IX',IY',Tj)
DANS LA MEMOIRE M1
IX'=M
?
NON
OUI
IY'=N
?
NON
OUI
FIN

FIG.11

FIG.12

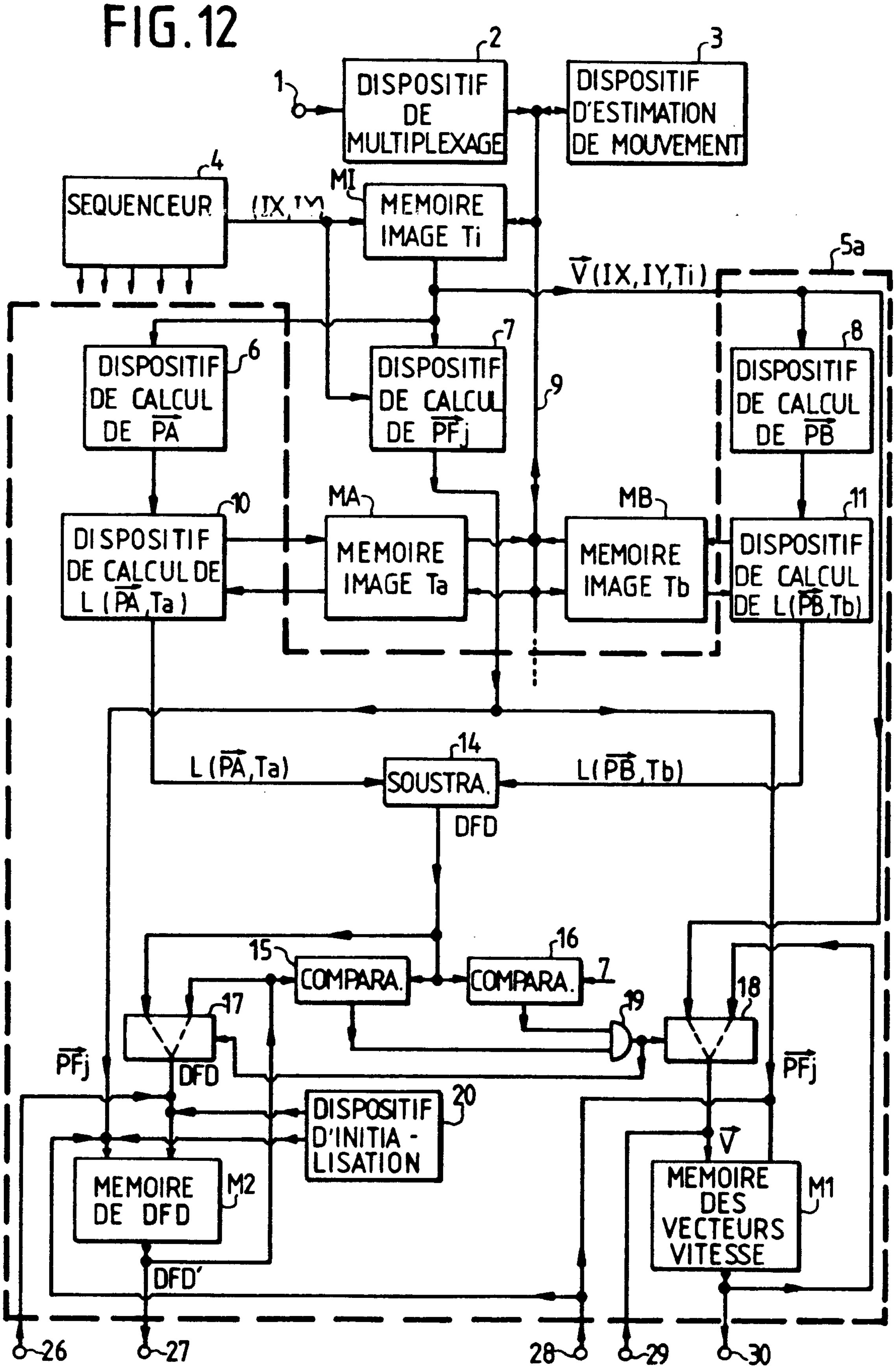
DISPOSITIF DE MULTIPLEXAGE
DISPOSITIF D'ESTIMATION DE MOUVEMENT
SEQUENCEUR
(IX,IY)
MI
MEMOIRE IMAGE Ti
V(IX,IY,Ti)
5a
DISPOSITIF DE CALCUL DE PA
DISPOSITIF DE CALCUL DE PFj
DISPOSITIF DE CALCUL DE PB
MA
MEMOIRE IMAGE Ta
MB
MEMOIRE IMAGE Tb
DISPOSITIF DE CALCUL DE L(PA,Ta)
DISPOSITIF DE CALCUL DE L(PB,Tb)
L(PA,Ta)
SOUSTRA.
L(PB,Tb)
DFD
COMPARA.
COMPARA.
DFD
PFj
PFj
V
DISPOSITIF D'INITIA-LISATION
MEMOIRE DE DFD
M2
MEMOIRE DES VECTEURS VITESSE
M1
DFD'
1
2
3
4
6
7
8
9
10
11
14
15
16
17
18
19
20
26
27
28
29
30

FIG.13

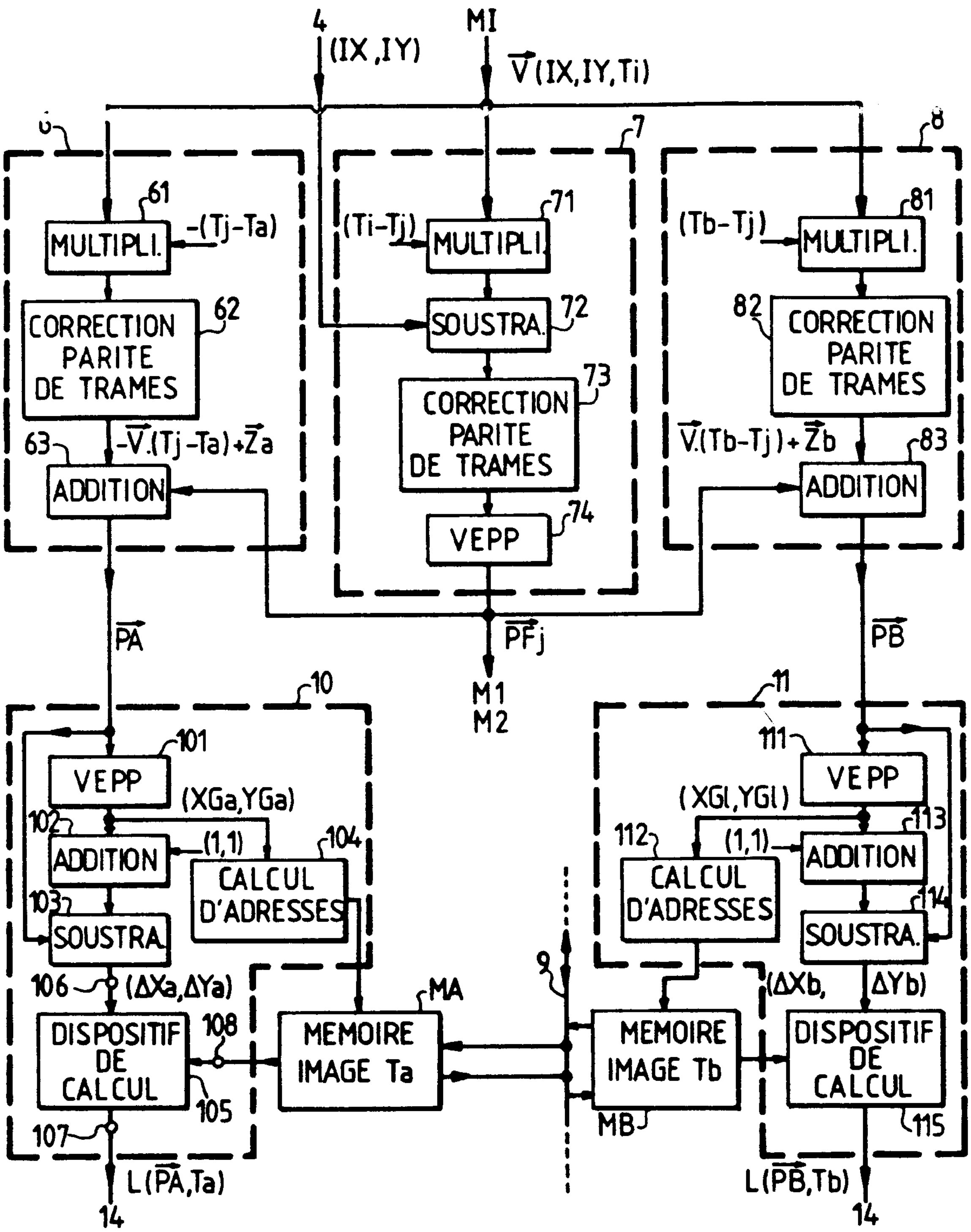
4
(IX,IY)
MI
V(IX,IY,Ti)
6
7
8
61
MULTIPLI.
-(Tj-Ta)
71
(Ti-Tj)
MULTIPLI.
81
(Tb-Tj)
MULTIPLI.
CORRECTION PARITE DE TRAMES
62
SOUSTRA.
72
82
CORRECTION PARITE DE TRAMES
CORRECTION PARITE DE TRAMES
73
63
-V.(Tj-Ta)+Za
V.(Tb-Tj)+Zb
83
ADDITION
ADDITION
VEPP
74
PA
PFj
PB
M1
M2
10
11
101
VEPP
(XGa,YGa)
111
VEPP
(XGl,YGl)
102
ADDITION
(1,1)
104
CALCUL D'ADRESSES
112
CALCUL D'ADRESSES
(1,1)
113
ADDITION
103
SOUSTRA.
114
SOUSTRA.
106
(ΔXa,ΔYa)
9
(ΔXb,
ΔYb)
DISPOSITIF DE CALCUL
108
MA
MEMOIRE IMAGE Ta
MEMOIRE IMAGE Tb
DISPOSITIF DE CALCUL
105
MB
115
107
L(PA,Ta)
L(PB,Tb)
14
14

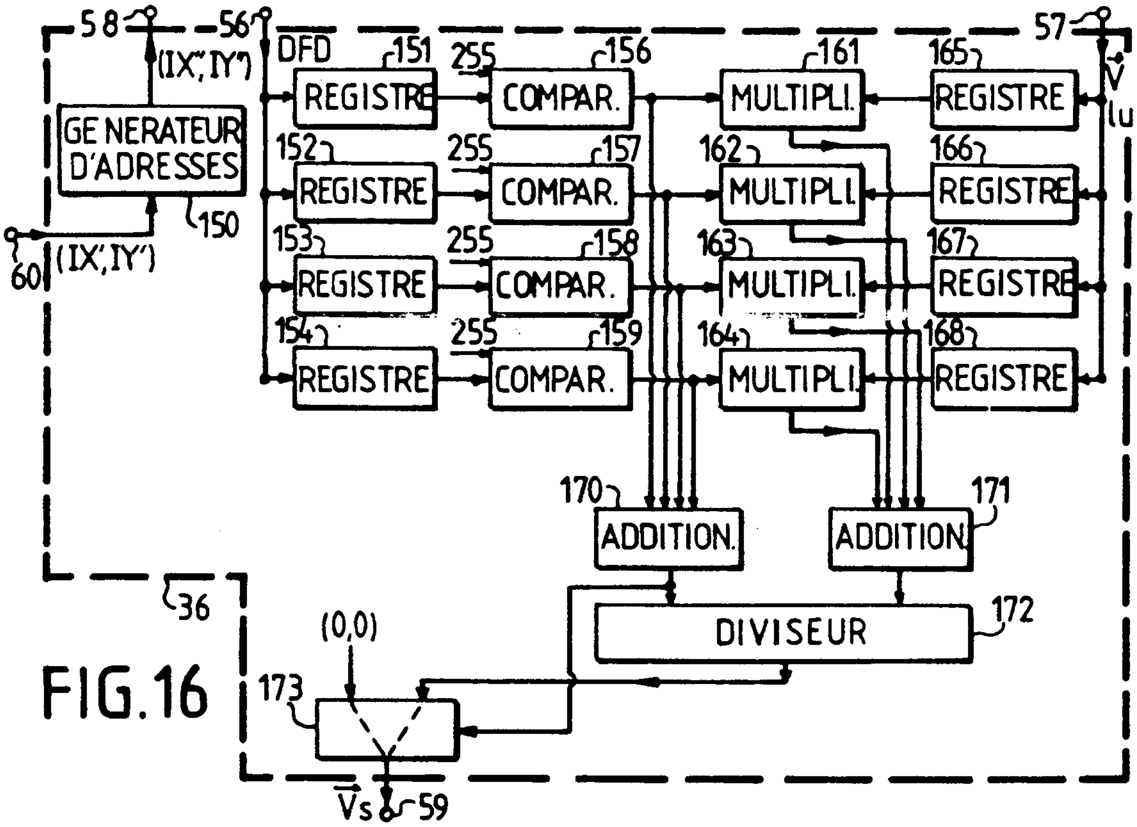
58
56
57
(IX",IY")
GE NERATEUR D'ADRESSES
150
(IX',IY')
60
DFD
151
152
153
154
REGISTRE
REGISTRE
REGISTRE
REGISTRE
255
255
255
255
156
157
158
159
COMPAR.
COMPAR.
COMPAR.
COMPAR.
161
162
163
164
MULTIPLI.
MULTIPLI.
MULTIPLI.
MULTIPLI.
165
166
167
168
REGISTRE
REGISTRE
REGISTRE
REGISTRE
$\vec{V}$lu
170
ADDITION.
171
ADDITION.
DIVISEUR
172
36
(0,0)
173
$\vec{V}$s
59

FIG.16

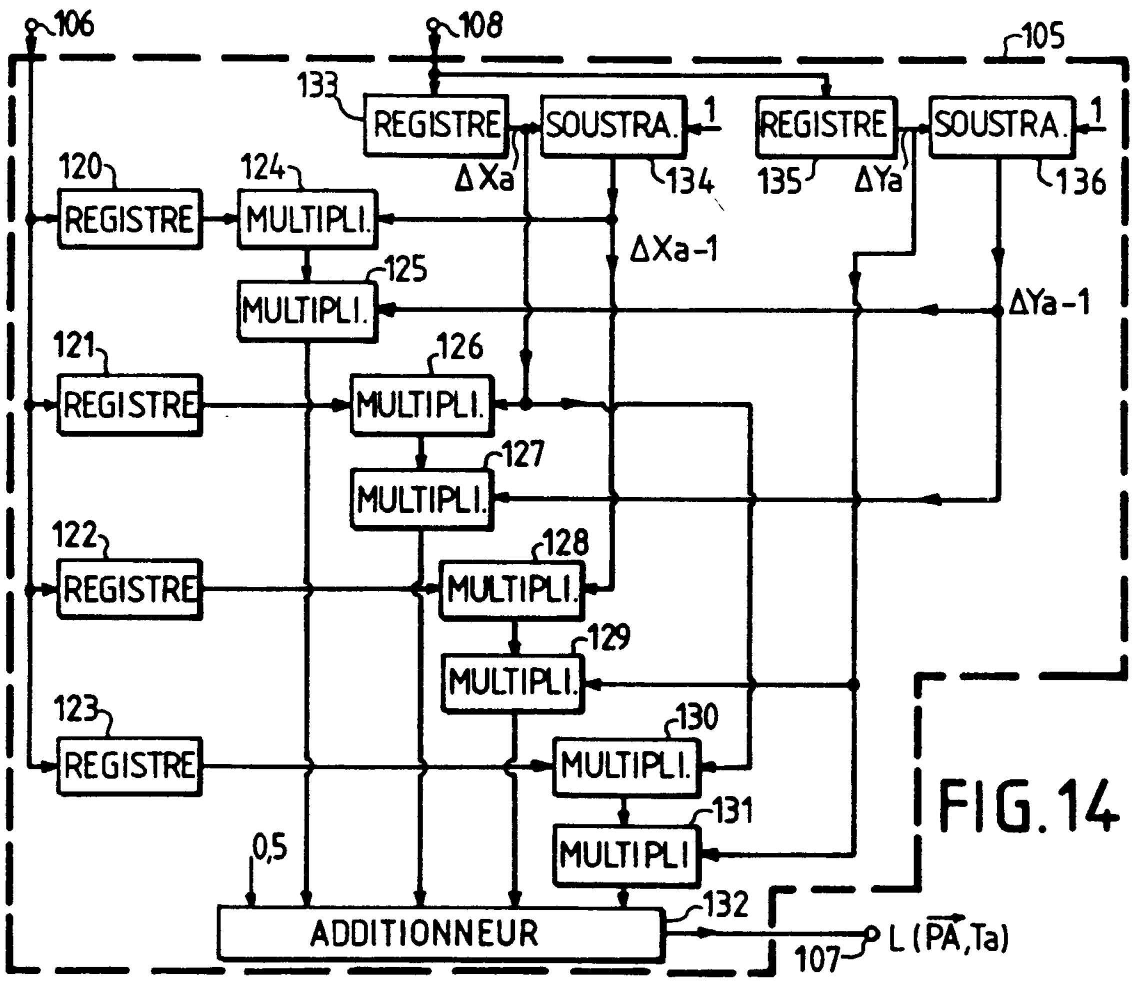
106
108
105
133
REGISTRE
SOUSTRA.
1
REGISTRE
SOUSTRA.
1
ΔXa
134
135
ΔYa
136
120
REGISTRE
124
MULTIPLI.
ΔXa-1
MULTIPLI.
125
ΔYa-1
121
REGISTRE
126
MULTIPLI.
127
MULTIPLI.
122
REGISTRE
128
MULTIPLI.
129
MULTIPLI.
123
REGISTRE
130
MULTIPLI.
131
MULTIPLI
0,5
ADDITIONNEUR
132
107
L($\vec{PA}$,Ta)

FIG.14

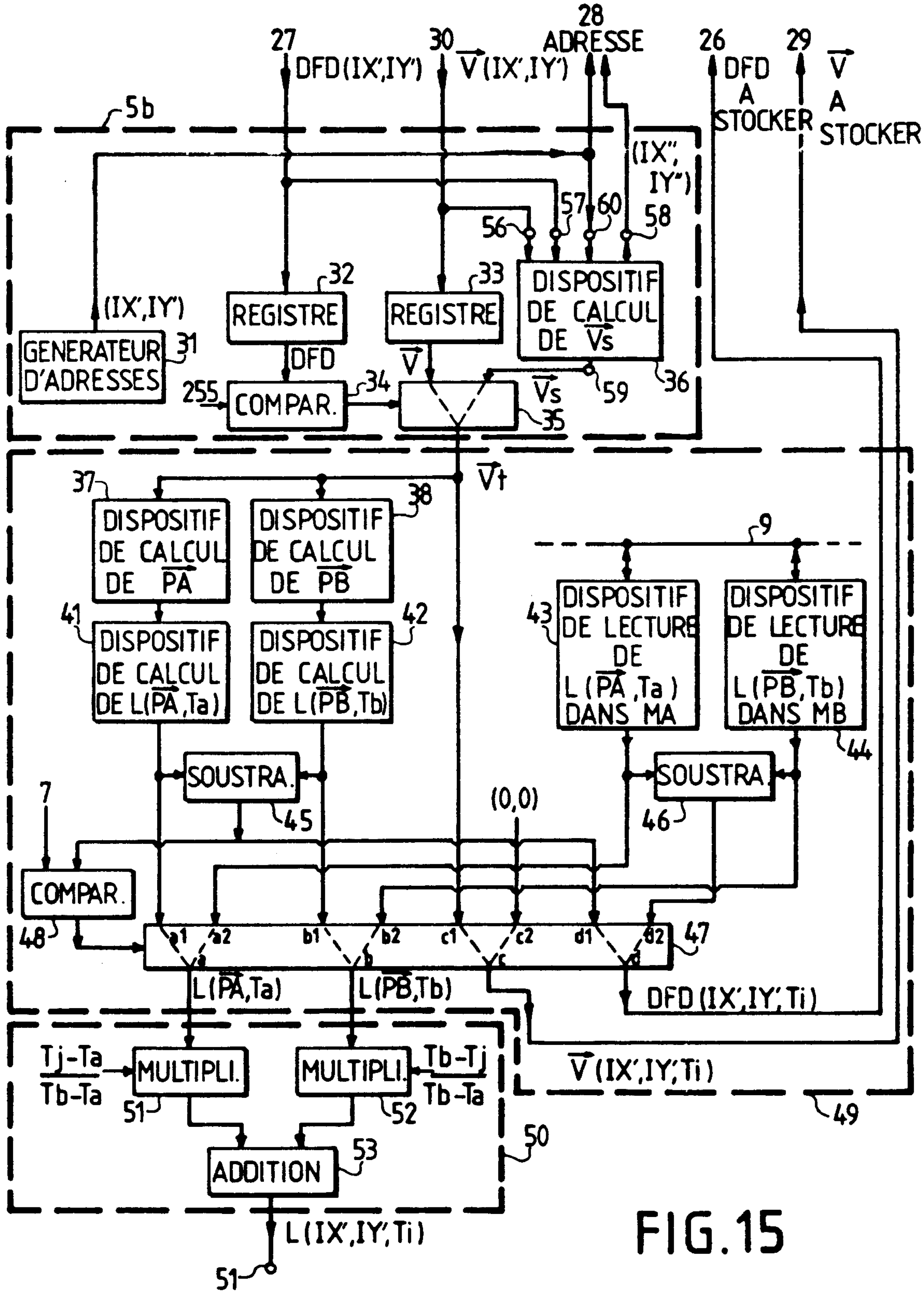
27
DFD(IX',IY')
30
V(IX',IY')
28
ADRESSE
26
DFD A STOCKER
29
V A STOCKER
5b
(IX",IY")
57
60
56
58
32
33
REGISTRE
REGISTRE
DISPOSITIF DE CALCUL DE Vs
(IX',IY')
GENERATEUR D'ADRESSES
31
DFD
V
255
COMPAR.
34
Vs
59
36
35
Vt
37
38
DISPOSITIF DE CALCUL DE PA
DISPOSITIF DE CALCUL DE PB
9
41
42
DISPOSITIF DE CALCUL DE L(PA,Ta)
DISPOSITIF DE CALCUL DE L(PB,Tb)
43
DISPOSITIF DE LECTURE DE L(PA,Ta) DANS MA
DISPOSITIF DE LECTURE DE L(PB,Tb) DANS MB
44
SOUSTRA.
45
SOUSTRA.
46
7
(0,0)
COMPAR.
48
a1 a2 b1 b2 c1 c2 d1 d2
a b c d
47
L(PA,Ta)
L(PB,Tb)
DFD(IX',IY',Ti)
V(IX',IY',Ti)
49
Tj-Ta / Tb-Ta
MULTIPLI.
MULTIPLI.
Tb-Tj / Tb-Ta
51
52
50
ADDITION
53
L(IX',IY',Ti)
51

FIG.15